# EUROPÄISCHE PATENTSCHRIFT

(11) **EP 2 016 533 B1**
(45) Veröffentlichungstag und Bekanntmachung des Hinweises auf die Patenterteilung: **26.03.2014**
(21) Anmeldenummer: 07724701.3
(22) Anmeldetag: 27.04.2007
(51) Int. Cl.: G06K 17/00, G06K 7/00, G06K 19/077, G07F 7/10, G06Q 20/34

(54) **VERFAHREN UND VORRICHTUNG ZUR PERSONALISIERUNG TRAGBARER DATENTRÄGER**
METHOD AND APPARATUS FOR PERSONALIZING PORTABLE DATA STORAGE MEDIA
PROCEDE ET DISPOSITIF POUR LA PERSONNALISATION DE SUPPORTS DE DONNEES PORTABLES

(30) Priorität: 28.04.2006 DE 102006019809; 23.05.2006 DE 102006024106; 26.07.2006 DE 102006034558
(43) Veröffentlichungstag der Anmeldung: 21.01.2009
(73) Patentinhaber: Giesecke & Devrient GmbH, 81677 München (DE)
(72) Erfinder: FINKENZELLER, Klaus, 85774 Unterföhring (DE); BRUS, Bernd, 85521 Ottobrunn (DE); GOETZ, Thomas, 85570 Markt Schwaben (DE); MATHÉ, Werner, 82216 Maisach (DE); BARROBÉS I MEIX, Carles, E-08041 Barcelona (ES); KAPP, Uwe, 78647 Trossingen (DE); BOSCH, Richard, 86356 Neusäss/Steppach (DE)
(86) Internationale Anmeldenummer: PCT/EP2007/003774
(87) Internationale Veröffentlichungsnummer: WO 2007/124939

(56) Entgegenhaltungen:
- EP-A- 1 011 071
- DE-A1- 19 641 892
- DE-A1- 19 958 559
- US-A1- 2005 034 889
- US-A1- 2005 218 212
- US-B1- 6 283 368

## Beschreibung

Die Erfindung betrifft ein Verfahren und eine Vorrichtung zur Personalisierung tragbarer Datenträger. Insbesondere betrifft die Erfindung die Initialisierung von Speicher- und Prozessorkarten wie etwa Chipkarten, Mobilfunkkarten und dergleichen, durch Ausstatten der Datenträger mit digitalen Daten, insbesondere durch Einbringen der Daten in nichtflüchtige Speicher, wie beispielsweise EEPROM- oder Flash-Speicher.

Abhängig von den Anwendungen, für die ein tragbarer Datenträger eingesetzt werden soll, sind in seinem Speicher unterschiedliche Daten und Programme gespeichert. Wenigstens ein Teil dieser Daten bzw. Programme wird während oder nach der Herstellung des tragbaren Datenträgers in einen nichtflüchtigen Speicher des tragbaren Datenträgers eingeschrieben. Dieser Einschreibvorgang wird üblicherweise als Personalisierung bezeichnet. Der Begriff "Personalisierung" wird dabei gleichermaßen als Sammelbegriff für das Einschreiben beliebiger Daten und Programme wie als Spezialbegriff für das Einschreiben von Daten verwendet, die für einen tragbaren Datenträger individuell sind. "Personalisierung" schließt daneben auch Maßnahmen am tragbaren Datenträger selbst ein wie etwa das Beschriften. Derartige Personalisierungsmaßnahmen sind allerdings grundsätzlich nicht Gegenstand dieser Erfindung.

Für das Einschreiben von Daten und Programmen, die gleichermaßen für mehrere tragbare Datenträger vorgesehen sind, wird häufig auch der Begriff "Initialisierung" verwendet. In einer Personalisierung bildet der Prozeß des Initialisierens dann einen ersten von zwei Abschnitten beim Personalisieren eines Datenträgers. Bei der Initialisierung wird der Datenträger mit Allgemeindaten versehen, die für alle Datenträger des gleichen Typs identisch sind. Diese Art Personalisierungsdaten wird im folgenden Initialisierungsdaten genannt. Im zweiten Abschnitt, der "Individualisierung", wird jeder Datenträger mit Individualisierungsdaten versehen, die beispielsweise solche Daten enthalten, die den einzelnen Datenträger an den Endkunden anpassen.

Soweit nicht ausdrücklich auf die Initialisierung abgestellt wird, soll unter dem Begriff "Personalisierung" im folgenden jeweils stets seine allgemeine Bedeutung, die nicht näher nach der Art der eingeschriebenen Daten unterscheidet, verstanden werden. Mit anderen Worten, der im folgenden verwendete Begriff "Personalisierung' umfaßt grundsätzlich gleichermaßen eine Personalisierung im engeren Sinn als auch eine Initialisierung.

Nach dem Stand der Technik (W. Rankl, W. Effing: Handbuch der Chipkarten. München4, 2002) wird dementsprechend die Personalisierung üblicherweise in zwei Produktionsschritten, die jeweils die Initialisierung und die Individualisierung vollziehen, durchgeführt. Meist geschieht dies unter Verwendung verschiedener Anlagen und Techniken. Im ersten Schritt werden die identischen Initialisierungsdaten in die zu personalisierenden Datenträger eingebracht, im zweiten die Individualisierungsdaten.

Der Prozeß der Initialisierung von Datenträgern ist ein kritischer Schritt innerhalb des gesamten Produktionsprozesses der Datenträger, da die Zeit, die zum Beschreiben des nichtflüchtigen Speichers der Datenträger mit Initialisierungsdaten benötigt wird, vergleichsweise hoch ist und die Produktionskosten wesentlich beeinflußt. Für künftige Generationen von Datenträgern, deren Speicherkapazität wesentlich größer sein wird als die heutiger, wird sich dieses Problem noch verschärfen, weil die Menge der Initialisierungsdaten zunehmen wird.

Es gibt Initialisierungsmaschinen, in denen eine Mehrzahl von Datenträgern parallel initialisiert werden kann. Dazu wird jedoch eine entsprechende Anzahl von Lesegeräten zur Übertragung der Initialisierungsdaten benötigt, da immer ein Datenträger mittels eines Lesegerätes initialisiert wird. Genauso benötigt man eine oder mehrere entsprechend eingerichtete Steuereinrichtungen für die Lesegeräte, was diese Maschinen teuer macht. Der Grad der Parallelisierung ist daher vergleichsweise gering.

Zur Erhöhung des Durchsatzes ist es aus der DE 199 58 559 bekannt, einen Speicher zur Aufnahme von Chargendatensätzen für eine Mehrzahl von Chipkarten bereitzustellen, die jeweils einheitliche Initialisierungsdaten sowie für jede Karte einheitliche Personalisierungsdaten enthalten. Eine zu personalisierende Kartencharge wird zunächst einheitlich mit dem Initialisierungsdatensatz initialisiert. Anschließend werden Karte für Karte die Personalisierungsdaten übertragen.

Ebenfalls zur Erhöhung des Durchsatzes ist es aus der US2005/0218212 A1 bekannt, mittels einer Personalisierungsmaschine mehrere Pässe gleichzeitig zu personalisieren, wobei an jeden Pass ein unterschiedlicher Datensatz übertragen wird. Die unabhängigen Ansprüche sind gegenüber diesem Dokument abgegrenzt.

Der Schritt der Initialisierung kann auch beschleunigt werden, indem zunächst nur ein einzelner Datenträger konventionell mittels logischer Kommandos initialisiert wird. Danach wird ein Speicherabbild des gesamten Speichers dieses Datenträgers erzeugt und dazu benutzt, unter Zuhilfenahme der physikalischen Speicheradressen die weiteren Datenträger des gleichen Typs zu initialisieren. Ein solches Speicherabbild wird auch Image genannt und bezeichnet ein bitgenaues Abbild des Originalspeichers. Es enthält mehr Information als nur die in dem Speicher des Masterdatenträgers gespeicherten Dateien, etwa die Struktur des Dateisystems und dergleichen. Dies ermöglicht es schnell eine exakte, bitgenaue Wiedergabe des Datenträgers herzustellen, da dazu direkt auf Hardwarefunktionen und physikalische Speicheradressen zurückgegriffen werden kann.

Um einen hohen Durchsatz zu erzielen, kann die Personalisierung generell mit mehreren tragbaren Datenträgern gleichzeitig durchgeführt werden. Bei kontaktlosen tragbaren Datenträgern kann eine gleichzeitige Datenübertragung zwischen mehreren tragbaren Datenträgern und einer Personalisierungsvorrichtung allerdings zu Datenkollisionen und damit zu einem Datenverlust auf dem Übertragungskanal führen. Dies kann durch den Einsatz eines Antikollisionsalgorithmus vermieden werden, mit dessen Hilfe aus einer Vielzahl von kontaktlosen tragbaren Datenträgern ein einzelner tragbarer Datenträger selektiert und gezielt angesprochen werden kann. Derartige Antikollisionsalgorithmen sind beispielsweise in der Norm ISO/IEC 14443-3 oder ISO/IEC 15693-3 definiert. Die Verwendung eines Antikollisionsalgorithmus bei der Durchführung der Personalisierung hat allerdings den Nachteil, daß wiederum der Durchsatz reduziert wird.

Eine Datenkollision kann auch durch eine räumliche Trennung der tragbaren Datenträger verhindert werden. Die räumliche Trennung kann dadurch realisiert werden, daß die tragbaren Datenträger vereinzelt und zeitlich nacheinander demselben Schreib-/Lesegerät zugeführt werden. Dies wirkt sich allerdings wiederum negativ auf den erzielbaren Durchsatz aus. Ebenso ist es möglich, mehreren Schreib-/Lesegeräten zeitgleich je einen tragbaren Datenträger zuzuführen. Dabei ist es allerdings erforderlich, die einzelnen Schreib-/Lesegeräte hochfrequenztechnisch so voneinander abzuschirmen, daß für jedes Schreib-/Lesegerät jeweils nur eine Kommunikation mit einem tragbaren Datenträger möglich ist. Eine derartige Abschirmung ist relativ aufwendig. Außerdem wird zur Erzielung eines großen Durchsatzes eine große Zahl von Schreib-/ Lesegeräten benötigt.

Bei der Personalisierung von kontaktbehafteten tragbaren Datenträgern treten ähnliche Probleme auf. So führt etwa die Steuerung einer Vielzahl von Schreib-/Lesegeräten zu aufwendigen Konstruktionen und erfordert eine komplexe Steuersoftware.

Bei der Herstellung tragbarer Datenträger ist es in der Regel erforderlich, die in den Datenträgern enthaltenen integrierten Schaltkreise elektrisch zu kontaktieren, um beispielsweise Tests durchzuführen oder um Daten in die integrierten Schaltkreise einzuschreiben. Hierzu wird eine Kontaktiereinrichtung einer Produktionsmaschine gegen ein Kontaktfeld des tragbaren Datenträgers gepreßt. Das Kontaktfeld weist mehrere Kontaktflächen auf, die jeweils mit einem Anschluß des integrierten Schaltkreises verbunden sind.

Der Erfindung liegt die Aufgabe zugrunde, bei der Personalisierung von tragbaren Datenträgern mit einem geringen Aufwand einen hohen Durchsatz zu erzielen. Insbesondere ist es Aufgabe der vorliegenden Erfindung den parallelen Initialisierungsprozeß zu optimieren und dadurch die Produktionszeit und -kosten zu senken. Insgesamt soll eine effiziente Herstellung von tragbaren Datenträgern zu ermöglicht werden.

Diese Aufgabe wird durch ein Verfahren mit der Merkmalskombination des Anspruchs 1 gelöst sowie eine Vorrichtung mit den Merkmalen des unabhängigen Patentanspruchs 31 gelöst. In den davon abhängigen Ansprüchen sind vorteilhafte Ausgestaltungen und Weiterbildungen angegeben.

Beim erfindungsgemäßen Verfahren zur Personalisierung tragbarer Datenträger wird ein Personalisierungssignal gleichzeitig an eine Mehrzahl tragbarer Datenträger übertragen. Aus dem übertragenen Personalisierungssignal werden Personalisierungsdaten ermittelt, die in die integrierten Schaltkreise der tragbaren Datenträger abgespeichert werden. Die vorliegende Erfindung basiert insbesondere auf der Grundidee, die Initialisierung an einer Mehrzahl von tragbaren Datenträgern durch Beschreiben eines nichtflüchtigen Speichers der Datenträger mit identischen Personalisierungsdaten parallel vorzunehmen, indem das Initialisieren gleichzeitig oder zumindest zeitlich überlappend über ein den Datenträgern gemeinsames Lesegerät erfolgt. Der Einsatz eines gemeinsamen Lesegerätes statt vieler paralleler Lesegeräte ist wesentlich kostengünstiger, so daß mit dem gleichen Kostenaufwand mehr Datenträger parallel initialisiert werden können. Dadurch verkürzt sich der Produktionsprozeß entsprechend.

Die Erfindung hat den Vorteil, daß mit einem vergleichsweise geringen apparativen Aufwand bei der Personalisierung, insbesondere bei der Initialisierung von tragbaren Datenträgern ein hoher Durchsatz erzielt werden kann, da zur Personalisierung mehrerer tragbarer Datenträger nur eine einzige Signalquelle erforderlich ist.

Im Rahmen des erfindungsgemäßen Verfahrens wird das Personalisierungssignal im Rahmen einer unidirektionalen Signalübertragung von der Signalquelle an die tragbaren Datenträger übertragen wird. Durch den Verzicht auf eine Rückmeldung der einzelnen tragbaren Datenträger wird auf sehr einfache Weise eine Datenkollision verhindert. erfolgt.

Das Initialisieren mittels eines Einwegprotokolls, bei dem keine Kommunikation vom Datenträger zum Lesegerät vorgesehen ist. Dies macht es möglich, eine Mehrzahl von Datenträgern demselben Datenstrom des gemeinsamen Lesegeräts auszusetzen, da keine Antwortdaten des Datenträgers an das Lesegerät abgewartet und / oder verarbeitet werden müssen.

Vorzugsweise erfolgt die Übertragung der Daten zur Initialisierung an einen zu initialisierenden Datenträger über an dem Datenträger ausgebildete Kontakte zum Anschluß einer Kontaktlosschnittstelle, an der eine Kontaktlosschnittstelle jedoch nicht realisiert ist. Auf diese Weise können die Vorteile der kontaktlosen Initialisierung genutzt werden, ohne daß die Datenträger tatsächlich mit einer entsprechenden Kontaktlosschnittstelle ausgestattet sein müssen, die mit ihrer Realisierung verbunden Kosten also entfallen. Alternativ kann auch eine Übertragung an für eine kontaktbehaftete Kommunikation bestimmte Kontakte vorgesehen sein.

Vorteilhaft wird nach der Übertragung eines Personalisierungssignals eine vorgebbare Zeitspanne abgewartet und dann ein weiteres Personalisierungssignal übertragen. Die Zeitspanne wird insbesondere wenigstens so groß gewählt wie eine für die Verarbeitung des Personalisierungssignals durch die tragbaren Datenträger erwartete Verarbeitungszeit. Auf diese Weise kann auch ohne Rückmeldung von den tragbaren Datenträgern an die Signalquelle zuverlässig vermieden werden, daß ein Personalisierungssignal an einen tragbaren Datenträger übertragen wird, der noch nicht empfangsbereit ist. Gleichzeitig bleibt ein hoher Durchsatz gewährleistet.

In einer vorteilhaften Ausgestaltung des erfindungsgemäßen Verfahrens werden von den tragbaren Datenträgern die aus dem übertragenen Personalisierungssignal ermittelten Personalisierungsdaten und/ oder ein im Rahmen der Personalisierung im integrierten Schaltkreis erzeugter Speicherinhalt geprüft. Das Ergebnis der Prüfung kann jeweils in den Datenträgern gespeichert und/oder von den Datenträgern ausgegeben werden. Dabei ist es von Vorteil, wenn die weitere Bearbeitung der tragbaren Datenträger jeweils vom Ergebnis der Prüfung abhängig gemacht wird. Beispielsweise kann das Ergebnis der Prüfung an eine Testeinrichtung ausgegeben werden, die das Ergebnis der Prüfung insbesondere durch einen Vergleich mit einem Referenzwert auswertet. Auf diese Weise können Fehler bei der Personalisierung frühzeitig ermittelt und geeignete Gegenmaßnahmen getroffen werden.

Bei einer Verfahrensvariante, die bei der Personalisierung kontaktloser tragbarer Datenträger zum Einsatz kommt, wird das Personalisierungssignal kontaktlos übertragen. Hierzu kann vorgesehen sein, daß mehrere tragbare Datenträger innerhalb eines von der Personalisierungseinrichtung erzeugten Felds angeordnet werden. Insbesondere kann von der Personalisierungseinrichtung ein magnetisches Wechselfeld erzeugt werden. Ein besonders kompakter Aufbau läßt sich dadurch erreichen, daß die tragbaren Datenträger stapelförmig angeordnet werden. Auf diese Weise kann das erzeugte Feld optimal genutzt werden. Um eine zuverlässige Datenübertragung sicherzustellen, kann die Feldstärke auf die Anordnung der tragbaren Datenträger abgestimmt werden. Auf diese Weise kann auch verhindert werden, daß unnötig hohe Feldstärken erzeugt werden.

Zur Prüfung der abgespeicherten Personalisierungsdaten können die tragbaren Datenträger einem unmodulierten Feld ausgesetzt werden, da hierfür lediglich eine Energieversorgung der tragbaren Datenträger erforderlich ist, nicht jedoch eine Übertragung von Personalisierungssignalen.

Bei einer weiteren Verfahrensvariante werden zur Übertragung des Personalisierungssignals elektrisch leitende Verbindungen zwischen der Signalquelle und den tragbaren Datenträgern ausgebildet. Diese Verfahrensvariante kann bei der Personalisierung kontaktbehafteter tragbarer Datenträger eingesetzt werden. Insbesondere werden mehrere tragbare Datenträger parallel an die Signalquelle angeschlossen. In einer vorteilhaften Ausgestaltung der weiteren Verfahrensvariante wird das Personalisierungssignal während der Übertragung von der Signalquelle zu den tragbaren Datenträgern verstärkt. Dadurch lassen sich unerwünschte Rückwirkungen auf das Personalisierungssignal, die beispielsweise durch defekte tragbare Datenträger hervorgerufen werden können, vermeiden.

Gemäß einer bevorzugten Ausführungsform der Erfindung werden die Initialisierungsdaten von Adapterelementen empfangen, die jeweils mindestens einen oder eine Mehrzahl der Datenträger aufnehmen können. Über das Adapterelement werden die Daten zu dem Datenträger übertragen. Das Empfangen der Daten vom Lesegerät durch das Adapterelement wie die Übertragung der Daten an den Datenträger können kontaktlos oder kontaktbehaftet erfolgen.

Beispielsweise kann eine Mehrzahl von kontaktlos kommunizierenden Datenträgern oder solchen, die mittels geeigneter Adapterelemente zur kontaktlosen Kommunikation mit dem Lesegerät eingerichtet sind, zur Übertragung der Initialisierungsdaten vom Lesegerät zu den Datenträgern durch einen Spulentunnel des Lesegeräts hindurchgeführt oder in eine Helmholtz-Spule des Lesegeräts eingeführt werden. Für Datenträger, die in Adapterelementen mit galvanischen Kontaktstellen aufgenommen sind, kann das Lesegerät Kontaktbalken aufweisen, die mit den Kontaktstellen der Adapterelemente zusammenwirken, um die Initialisierungsdaten vom Lesegerät zum Datenträger zu übertragen.

Die Übertragung der Initialisierungsdaten erfolgt vorzugsweise in Form von Datenblöcken, wobei die Reihenfolge der zu übertragenden Datenblöcke beliebig sein kann. Für eine vollständige Initialisierung ist es somit nur nötig, daß ein Datenträger alle zu erhaltenden Datenblöcke, unabhängig von ihrer Reihenfolge, erhält. Dies macht es möglich, daß das Lesegerät die zu übertragenden Datenblöcke in Zyklen aussendet und ein zu initialisierender Datenträger zu jedem Zeitpunkt des Zyklus in den Initialisierungsbereich des Lesegerätes, beispielsweise den vorgenannten Spulentunnel, eintreten kann. Sobald sich der Datenträger über die Zeitspanne eines vollen Zyklus im Initialisierungsbereich aufgehalten hat, hat er alle zur Initialisierung notwendigen Datenblöcke erhalten. Somit wird eine zeitlich verschränkte Initialisierung verschiedener Mengen von Datenträgern möglich.

Vorzugsweise werden die Daten bzw. Datenblöcke verschlüsselt vom Lesegerät übertragen und auf dem Datenträger wieder entschlüsselt. So ist eine Initialisierung unter sicheren Bedingungen möglich.

Eine Prüfung der Korrektheit der Initialisierung kann dann datenträgerintern durchgeführt werden, vorzugsweise mittels Prüfsummen und vorzugsweise erst nach der Initialisierung. Eine Beeinträchtigung des Initialisierungsvorganges ist damit ausgeschlossen.

Die Erfindung bezieht sich weiterhin auf eine Vorrichtung zur Personalisierung tragbarer Datenträger. Im Falle der Personalisierung tragbaren Datenträger verfügt die Vorrichtung über eine Signalquelle zur Erzeugung eines Personalisierungssignals und eine mit der Signalquelle verbundene Antenneneinrichtung zur kontaktlosen Übertragung des Personalisierungssignals. Vorzugsweise befindet sich innerhalb der Übertragungsreichweite der Antenneneinrichtung ein Aufnahmebereich zur Aufnahme mehrerer tragbarer Datenträger ausgebildet ist. Die derart ausgebildete Vorrichtung dient der Personalisierung kontaktloser tragbarer Datenträger.

Außerdem bezieht sich die Erfindung auf eine Vorrichtung, mit der kontaktbehaftete tragbare Datenträger personalisiert werden können. Diese Vorrichtung weist eine Signalquelle zur Erzeugung eines Personalisierungssignals auf und zeichnet sich dadurch aus, daß an die Signalquelle mehrere Kontaktiereinrichtungen zur elektrischen Kontaktierung je mindestens eines tragbaren Datenträgers angeschlossen sind.

Vorzugsweise sind die Kontaktiereinrichtungen jeweils über einen Zwischenverstärker an die Signalquelle angeschlossen. Weiterhin kann vorgesehen sein, daß an die Kontaktiereinrichtungen jeweils eine Testeinrichtung angeschlossen ist, die einen vom kontaktierten tragbaren Datenträger ausgegebenen Wert auswertet. Auf diese Weise ist eine Auswertung der ausgegebenen Werte ohne eine Datenübertragung von den tragbaren Datenträgern zur Signalquelle möglich.

In einer bevorzugten Ausführungsvariante zur Herstellung von kontaktbehafteten Datenträgern werden die tragbaren Datenträger mittels einer Transportvorrichtung, die den Kontaktbereich des tragbaren Datenträgers mittels einer Kontaktiereinheit wenigstens zeitweise elektrisch kontaktiert, von einer ersten Personalisierungsbearbeitungsstation zu einer zweiten Personalisierungsbearbeitungsstation transportiert. Die Transportvorrichtung wird dabei von einer der Bearbeitungsstationen zeitweise elektrisch kontaktiert so daß eine elektrisch leitende Verbindung zwischen dieser Bearbeitungsstation und wenigstens einer Kontaktiereinheit der Transportvorrichtung ausgebildet wird. Eine direkte Kontaktierung der tragbaren Datenträger durch die Bearbeitungsstationen ist nicht erforderlich. Vielmehr werden innerhalb des Zeitraums, innerhalb dessen die Transportvorrichtung den Kontaktbereich des tragbaren Datenträgers elektrisch kontaktiert, Daten von einer der Bearbeitungsstationen an die elektronische Schaltung des tragbaren Datenträgers übermittelt. Insbesondere werden die tragbaren Datenträger im Rahmen der Bearbeitung initialisiert und/ oder personalisiert.

Die Personalisierung der tragbaren Datenträger kann auf diese Weise sehr effizient durchgeführt werden. Dies resultiert unter anderem daraus, daß das Handling der Transportvorrichtung einfacher gestaltet werden kann und einen höheren Durchsatz ermöglicht als das direkte Handling einzelner tragbarer Datenträger. Insbesondere entfallen die Schritte der Entnahme des tragbaren Datenträgers und eine Zuführung zu einer Kontaktiervorrichtung.

Die Kontaktiereinheit der Transportvorrichtung kann für einen Teil des Zeitintervalls, innerhalb dessen die Transportvorrichtung den tragbaren Datenträger aufnimmt, in eine Ruheposition überführt werden, in der die Kontaktiereinheit den Kontaktbereich des tragbaren Datenträgers nicht kontaktiert. Vorzugsweise befindet sich die Kontaktiereinheit der Transportvorrichtung während des Transports wenigstens zeitweise in der Ruheposition. Dadurch kann beispielsweise vermieden werden, daß während dieses Zeitraums Störsignale an den tragbaren Datenträger übermittelt werden.

Der tragbare Datenträger kann beispielsweise in einen Schacht der Transportvorrichtung eingeführt werden. Dies ermöglicht eine zuverlässige Fixierung des tragbaren Datenträgers an der Transportvorrichtung und einen Schutz des tragbaren Datenträgers vor unerwünschten mechanischen Einwirkungen. Pro Transportvorrichtung werden dabei jeweils mehrere tragbare Datenträger aufgenommen. Dies ermöglicht einen sehr hohen Durchsatz an tragbaren Datenträgern.

Ein nicht durch die Erfindung gedecktes Umrüstverfahren zeichnet sich dadurch aus, daß erste Transportvorrichtungen für den Transport der tragbaren Datenträger erster Bauart gegen zweite Transportvorrichtungen für den Transport der tragbaren Datenträger zweiter Bauart ausgetauscht oder in diese umgebaut werden und dabei die Ausbildung externer Anschlüsse der Transportvorrichtungen, über die eine elektrische Verbindung zu den von den Transportvorrichtungen aufgenommenen tragbaren Datenträgern herstellbar ist, beibehalten wird. ,

Das Umrüstverfahren hat den Vorteil, daß die Produktionsanlage mit relativ geringem Aufwand auf die Bearbeitung von tragbaren Datenträgern einer anderen Bauart umgerüstet werden kann. Außer dem Austausch oder dem Umbau der Transportvorrichtungen sind keine größeren Modifikationen der Produktionsanlage erforderlich.

Die Besonderheit einer nicht durch die Erfindung gedeckten Transportvorrichtung besteht darin, daß sie wenigstens eine Kontaktiereinheit zur elektrischen Kontaktierung des tragbaren Datenträgers aufweist.

Die Kontaktiereinheit ist vorzugsweise so ausgebildet, daß sie zwischen einer Arbeitsposition, in der sie den tragbaren Datenträger elektrisch kontaktiert und einer Ruheposition, in der sie den tragbaren Datenträger nicht elektrisch kontaktiert, beweglich ist. Die Transportvorrichtung kann einen externen Anschluß aufweisen, der mit der Kontaktiereinheit elektrisch leitend verbunden ist. Vorteilhaft weist die Transportvorrichtung mehrere Schächte zur Aufnahme von tragbaren Datenträgern auf.

Vorteil der nicht durch die Erfindung gedeckten Produktionsanlage ist es, daß für die Bearbeitung tragbarer Datenträger unterschiedlicher Bauart unterschiedliche Transportvorrichtungen zum Transport der Datenträger zwischen verschiedenen Bearbeitungsstationen und zur elektrischen Kontaktierung der Kontaktbereiche der tragbaren Datenträger vorgesehen sind. Zweckmäßig weisen die unterschiedlichen Transportvorrichtungen dabei jeweils identische externe Anschlüsse zum Anschließen der Transportvorrichtungen an die Bearbeitungsstationen auf.

Die Erfindung wird nachstehend anhand der in der Zeichnung dargestellten Ausführungsbeispiele erläutert. Darin sind die tragbaren Datenträger jeweils als Chipkarte ausgebildet. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Es zeigen:
- Fig. 1: eine Prinzipdarstellung eines ersten Ausführungsbeispiels einer erfindungsgemäß ausgebildeten Personalisierungseinrichtung zur Personalisierung von Chipkarten,
- Fig. 2: ein Zustandsdiagramm zur Veranschaulichung der Personalisierung für eine der Chipkarten, die im Aufnahmebereich der in Fig. 1 dargestellten Personalisierungseinrichtung angeordnet sind,
- Fig. 3: einen Ausschnitt aus einem Zustandsdiagramm zur Veranschaulichung der Variante des erfindungsgemäßen Verfahrens, bei der der Selbsttest nicht unmittelbar im Anschluß an den Empfang des Personalisierungssignals, sondern zu einem späteren Zeitpunkt ausgeführt wird,
- Fig. 4: einen Ausschnitt aus einem Zustandsdiagramm zur Veranschaulichung der Auswertung der in der Chipkarte gespeicherten Statusinformation,
- Fig. 5: eine Prinzipdarstellung eines zweiten Ausführungsbeispiels der erfindungsgemäßen Personalisierungseinrichtung zur Personalisierung von Chipkarten,
- Fig. 6: eine Prinzipdarstellung einer Weiterbildung des zweiten Ausführungsbeispiels der Personalisierungseinrichtung zur Personalisierung von Chipkarten.
- Fig. 7: eine perspektivische Ansicht eines Adapterelements für einen Datenträger zur Durchführung eines erfindungsgemäßen Verfahrens gemäß einer ersten Ausführungsform;
- Fig. 8: einen Querschnitt des Adapterelements aus Fig. 7 entlang der Linie II-II;
- Fig. 9: eine perspektivische Ansicht eines Spulentunnels für ein Lesegerät zur Durchführung des erfindungsgemäßen Verfahrens gemäß der ersten Ausführungsform;
- Fig. 10: eine perspektivische Ansicht eines Adapterelements für einen Datenträger zur Durchführung eines erfindungsgemäßen Verfahrens gemäß einer zweiten Ausführungsform;
- Fig. 11: einen Querschnitt des Adapterelements aus Fig. 10 entlang der Linie V-V;
- Fig. 12: eine Seitenansicht einer Helmholtz-Spule für ein Lesegerät zur Durchführung des erfindungsgemäßen Verfahrens gemäß der zweiten Ausführungsform;
- Fig. 13: eine perspektivische Ansicht eines Adapterelements für einen Datenträger zur Durchführung eines erfindungsgemäßen Verfahrens gemäß einer dritten Ausführungsform;
- Fig. 14: eine perspektivische Ansicht einer Anschlußvorrichtung eines Lesegeräts zur Durchführung des erfindungsgemäßen Verfahrens gemäß der dritten Ausführungsform; und
- Fig. 15: eine Seitenansicht eines Behälters zum Stapeln der Adapterelemente aus Fig. 13,
- Fig. 16: eine schematische Darstellung des Prinzips einer Variante der dritten Ausführungsform der der Erfindung,
- Fig. 17: den inneren Aufbau eines Ausführungsbeispiels des Transportmagazins in einer schematischen Darstellung,
- Fig. 18: die Rückseite eines Ausführungsbeispiels des Transportmagazins in einer schematischen Darstellung,
- Fig. 19, 20, 21: verschiedene Momentaufnahmen eines Ausschnitts aus Fig. 17 zur Veranschaulichung der Kontaktierung der Chipkarten im Transportmagazin,
- Fig. 22: ein Ausführungsbeispiel einer Produktionsanlage zur Bearbeitung von Chipkarten in Blockdarstellung,
- Fig. 23: den inneren Aufbau eines Ausführungsbeispiels eines Transportmagazins und einer Bearbeitungsstation kurz vor einer elektronischen Bearbeitung der Chipkarten innerhalb des Transportmagazins in einer schematischen Darstellung,
- Fig. 24: den inneren Aufbau des Transportmagazin und der Bearbeitungsstation der Fig. 23 während der elektronischen Bearbeitung der Chipkarten innerhalb des Transportmagazins in einer schematischen Darstellung und
- Fig. 25: ein Ausführungsbeispiel einer Entnahmevorrichtung für die Chipkarten in einer schematischen Darstellung.

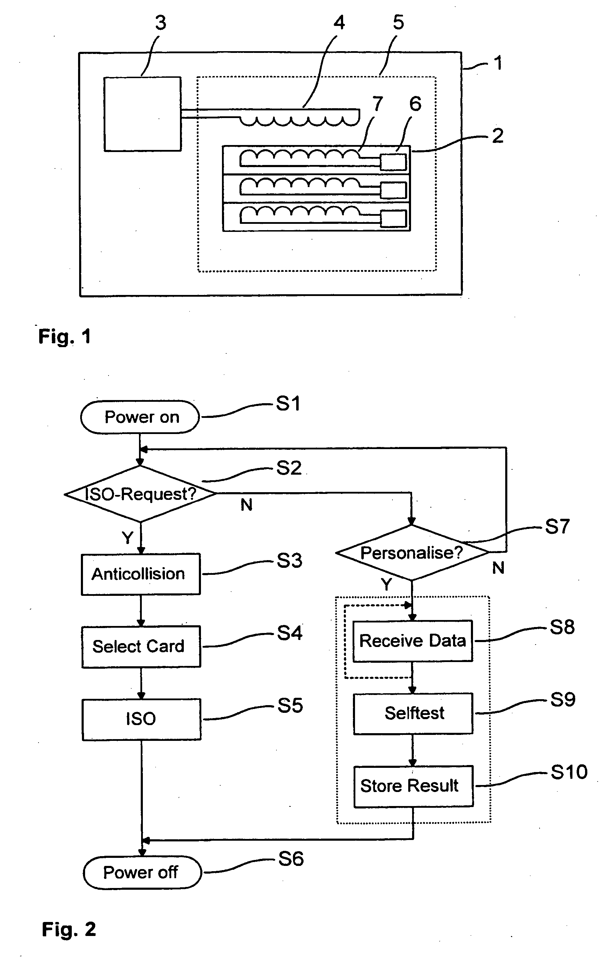

Fig. 1 zeigt eine Prinzipdarstellung eines ersten Ausführungsbeispiels einer erfindungsgemäß ausgebildeten Personalisierungseinrichtung 1 zur Personalisierung von Chipkarten 2.

Die Personalisierungseinrichtung 1 beinhaltet ein Lesegerät, das eine einer Signalquelle 3 aufweist, an die eine Geräteantenne 4 angeschlossen ist. Die Geräteantenne 4 ist in einem Aufnahmebereich 5 zur Aufnahme der zu personalisierenden Chipkarten 2 angeordnet. Innerhalb des Aufnahmebereichs 5 sind mehrere Chipkarten 2 stapelförmig aufgeschichtet. Die Chipkarten 2 sind kontaktlos ausgebildet und weisen jeweils einen integrierten Schaltkreis 6 und eine daran angeschlossene Antenne 7 auf.

Neben den dargestellten Komponenten kann die Personalisierungseinrichtung 1 noch weitere Komponenten aufweisen, die aus Gründen der Übersichtlichkeit nicht eingezeichnet sind.

Im Rahmen der Personalisierung werden Personalisierungsdaten in den integrierten Schaltkreisen 6 der Chipkarten 2 abgespeichert. Bei den Personalisierungsdaten kann es sich um beliebige Daten oder Programme handeln. Die Personalisierungsdaten oder Daten für deren Erzeugung können in der Signalquelle 3 oder einer sonstigen Komponente der Personalisierungseinrichtung 1 gespeichert sein oder von diesen erzeugt werden. Ebenso ist es möglich, die Personalisierungsdaten oder Daten für deren Erzeugung von einem externen Gerät an die Personalisierungseinrichtung 1 zu übermitteln.

Zur Durchführung der Personalisierung werden die Chipkarten 2 in den Aufnahmebereich 5 der Personalisierungseinrichtung 1 verbracht. Die in Fig. 1 dargestellte stapelförmige Anordnung der Chipkarten 2 bietet dabei die Möglichkeit, in einem Aufnahmebereich 5 mit vergleichsweise geringen Abmessungen viele Chipkarten 2 unterzubringen.

Die Signalquelle 3 erzeugt ein Personalisierungssignal, das die Personalisierungsdaten repräsentiert. Das Personalisierungssignal wird der Geräteantenne 4 zugeführt, die beispielsweise als Spule ausgebildet ist und ein vom zugeführten Personalisierungssignal abhängiges magnetisches Wechselfeld erzeugt. Beispielsweise kann ein magnetisches Wechselfeld der Frequenz 13,56 MHz gemäß ISO/ IEC 14443 erzeugt werden. Die Feldstärke des mit der Geräteantenne 4 erzeugten Felds wird so gewählt, daß für jede der aufgestapelten Chipkarten 2 ein Empfang des Personalisierungssignals möglich ist. Hierbei kann vorgesehen sein, daß die durch die Norm ISO/ IEC 14443-2 vorgegebene maximale Feldstärke Hₘₐₓ = 7,5 A/m überschritten wird.

Das Personalisierungssignal wir gleichzeitig an alle Chipkarten 2 innerhalb des Aufnahmebereichs 5 der Personalisierungseinrichtung 1 übertragen, d.h. jede Chipkarte 2 empfängt dasselbe Personalisierungssignal. Die Übertragung des Personalisierungssignals erfolgt unidirektional von der Signalquelle 3 zu den Chipkarten 2. Eine Signalübertragung in umgekehrter Richtung von den Chipkarten 2 an die Signalquelle 3 ist nicht vorgesehen. Damit wird vermieden, daß es zu Kollisionen zwischen Signalen kommt, die von verschiedenen Chipkarten 2 gesendeten werden. Einzelheiten zum Personalisierungsvorgang werden anhand von Fig. 2 beschrieben.

Fig. 2 zeigt ein Zustandsdiagramm zur Veranschaulichung der Personalisierung für eine der Chipkarten 2, die im Aufnahmebereich 5 der in Fig.1 dargestellten Personalisierungseinrichtung 1 angeordnet sind.

Der Durchlauf des Zustandsdiagramms beginnt mit einem Schritt S1, in dem die Chipkarte 2 in Betrieb genommen wird. Die Inbetriebnahme erfolgt dadurch, daß im Bereich der Chipkarte 2 ein Feld mit einer für die Energieversorgung der Chipkarte 2 ausreichenden Feldstärke erzeugt wird. Das Feld induziert in der Antenne 7 der Chipkarte 2 eine Spannung, aus der eine Versorgungsspannung für den integrierten Schaltkreis 6 gewonnen wird.

An Schritt S1 schließt sich ein Schritt S2 an, in dem geprüft wird, ob eine Datenübertragung gemäß der ISO-Norm durchgeführt werden soll. Diese Prüfung kann darin bestehen, daß ein von der Chipkarte 2 empfangenes erstes Kommando ausgewertet wird. Handelt es sich bei dem empfangenen ersten Kommando um ein standardisiertes Kommando, beispielsweise gemäß der Norm ISO/IEC 14443-3, so wird davon ausgegangen, daß eine Datenübertragung gemäß ISO durchgeführt werden soll und es wird als nächstes ein Schritt S3 ausgeführt.

Im Schritt S3 wird ein für sich bekannter Antikollisionsalgorithmus abgearbeitet. An Schritt S3 schließt sich ein Schritt S4 an, in dem die Chipkarte 2 für die Datenübertragung ausgewählt wird. Nach Schritt S4 wird ein Schritt S5 ausgeführt, in dem eine Datenübertragung gemäß dem ISO-Protokoll durchgeführt wird. Auf Schritt S5 folgt ein Schritt S6, in dem die Chipkarte 2 außer Betrieb genommen wird. Dies kann durch Abschalten des Felds bzw. durch Entnehmen der Chipkarte 2 aus dem Feld erfolgen. Mit Schritt S6 ist der Durchlauf des Zustandsdiagramms beendet.

Die Schritte S3, S4 und S5 repräsentieren die übliche bidirektionale Datenübertragung bei kontaktlosen Chipkarten 2 gemäß der ISO-Norm. Die für das erfindungsgemäße Personalisierungsverfahren vorgesehenen Chipkarten 2 sind zwar in der Regel so ausgebildet, daß sie eine Datenübertragung nach der ISO-Norm abwickeln können. Im Rahmen des erfindungsgemäßen Personalisierungsverfahrens wird aber keine derartige Datenübertragung durchgeführt, sondern die im folgenden näher beschriebene unidirektionale Übertragung des Personalisierungssignals von der Signalquelle 3 zu mehreren Chipkarten 2.

Die Übertragung des Personalisierungssignals wird dann ausgeführt, wenn im Schritt S2 festgestellt wird, daß keine Datenübertragung nach der ISO-Norm durchgeführt werden soll. Dies kann daran erkannt werden, daß sich das in Schritt 2 analysierte erste Kommando von einem standardisierten Kommando unterscheidet. In diesem Fall schließt sich an Schritt S2 ein Schritt S7 an, in dem abgefragt wird, ob eine Personalisierung der Chipkarte 2 durchgeführt werden soll. Die Abfrage kann eine Analyse des ersten Kommandos beinhalten. Soll keine Personalisierung durchgeführt werden, so wird erneut Schritt S2 ausgeführt. Andernfalls geht die Chipkarte 2 in einen Personalisierungsmodus über, der mit einem Schritt S8 beginnt und in Fig. 2 durch einen gestrichelten Rahmen dargestellt ist.

Die Signalquelle 3, die das erste Kommando gleichzeitig an alle Chipkarten 2 im Aufnahmebereich 5 der Personalisierungseinrichtung 1 sendet, erwartet von den Chipkarten 2 keine Rückmeldung auf das erste Kommando, sondern wartet lediglich eine vorgebbare Zeit ab. Die Wartezeit ist so bemessen, daß den Chipkarten 2 ausreichend Zeit bleibt die Abfragen der Schritte S2 und S7 abzuarbeiten, in den Personalisierungsmodus zu wechseln und wieder empfangsbereit zu sein.

Im Schritt S8 empfängt die Chipkarte 2 das Personalisierungssignal, mit dem Personalisierungsdaten übertragen werden, von der Signalquelle 3. Wie durch eine gestrichelte Linie in Fig. 2 angedeutet ist, können die Personalisierungsdaten auch durch eine mehrfache Ausführung des Schrittes S8 übertragen werden, d. h. es können mehrere Personalisierungssignale nacheinander an die Chipkarte 2 übermittelt werden. Das Personalisierungssignal wird von der Signalquelle 3 jeweils gleichzeitig an alle Chipkarten 2 im Aufnahmebereich 5 der Personalisierungseinrichtung 1 gesendet. Dabei erwartet die Signalquelle 3 keine Rückmeldung von den Chipkarten 2 und wartet nach dem Senden des Personalisierungssignals eine vorgegebene Zeit ab. Die Wartezeit ist so bemessen, daß die Chipkarten 2 die mit dem Personalisierungssignal übertragenen Personalisierungsdaten prüfen und in einem nichtflüchtigen Speicher, beispielsweise einem EEPROM, speichern können. Die übertragenen Personalisierungsdaten werden entweder direkt in den Speicher eingeschrieben oder dienen als Basis für die Erzeugung eines gewünschten Speicherinhalts.

Um die Prüfung der übertragenen Personalisierungsdaten zu ermöglichen, können die Personalisierungsdaten mit einer Prüfsumme abgesichert werden. Die Prüfung wird vorzugsweise gleich nach dem Empfangen des Personalisierungssignals im Schritt S8 durchgeführt. Zusätzlich besteht die Möglichkeit, in einem Schritt S9, der sich an Schritt S8 anschließt, eine Konsistenzprüfung eines im Rahmen der Personalisierung im integrierten Schaltkreis 6 der Chipkarte 2 erzeugten Speicherinhalts durchzuführen. Hierzu führt die Chipkarte 2 im Schritt S9 einen Selbsttest aus und ermittelt dabei etwaige Unstimmigkeiten. Das Testergebnis wird in einem Schritt S10, der sich an Schritt S9 anschließt, in der Chipkarte 2 gespeichert.

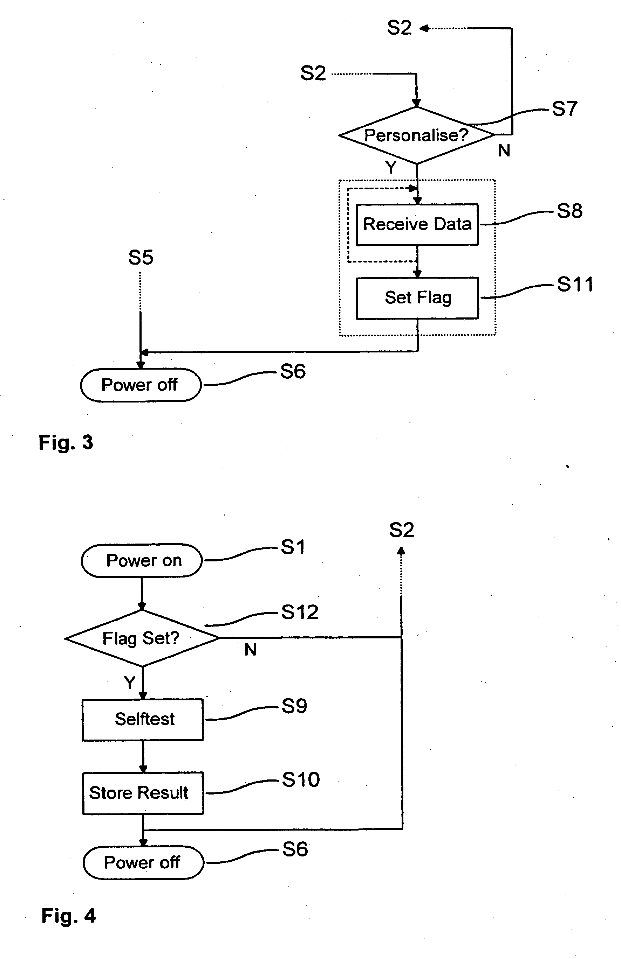

Bei einer Variante des erfindungsgemäßen Verfahrens wird der Selbsttest zu einem späteren Zeitpunkt ausgeführt. Dies wird im Einzelnen anhand der Fig. 3 und 4 erläutert.

Im Anschluß an Schritt S10, der den letzten Schritt der Personalisierung darstellt, wird Schritt S6 ausgeführt, in dem die Chipkarte 2 außer Betrieb genommen wird. Dann ist der Durchlauf des Zustandsdiagramms beendet.

Fig. 3 zeigt einen Ausschnitt aus einem Zustandsdiagramm zur Veranschaulichung der Variante des erfindungsgemäßen Verfahrens, bei der der Selbsttest nicht unmittelbar im Anschluß an den Empfang des Personalisierungssignals, sondern zu einem späteren Zeitpunkt ausgeführt wird. Der in Fig. 3 nicht dargestellte Teilbereich des Zustandsdiagramms ist identisch zu dem entsprechenden Teilbereich des Zustandsdiagramms der Fig. 2.

Bei der in Fig. 3 dargestellten Variante wird im Anschluß an den Schritt S8, in dem die Chipkarte 2 die Personalisierungsdaten empfängt, anstelle des Schritts S9 ein Schritt S11 ausgeführt. Im Schritt S11 wird eine Statusinformation in der Chipkarte 2 gespeichert. Die Statusinformation gib an, daß ein Selbsttest durchzuführen ist. Die Auswertung der Statusinformation erfolgt bei der nächsten Inbetriebnahme der Chipkarte 2. Dies ist in Fig. 4 dargestellt. An Schritt S11 schließt sich Schritt S6 an, in dem die Chipkarte 2 außer Betrieb genommen wird.

In einer nicht dargestellten Variante wird der Schritt S11 vor dem Schritt S8 ausgeführt. Ein Abbruch der Prozedur bei Schritt S8 führt dann in jedem Fall bei S9 zu einer Fehlermeldung.

Fig. 4 zeigt einen Ausschnitt aus einem Zustandsdiagramm zur Veranschaulichung der Auswertung der in der Chipkarte 2 gespeicherten Statusinformation. Der nicht dargestellte Teilbereich des Zustandsdiagramms entspricht wiederum der Fig. 2.

Im Unterschied zu Fig. 2 wird beim Zustandsdiagramm der Fig. 4 im Anschluß an die Inbetriebnahme der Chipkarte 2 in Schritt S1 zunächst ein Schritt S12 ausgeführt. Im Schritt S12 wird abgefragt, ob im Speicher der Chipkarte 2 eine Statusinformation gespeichert ist. Falls im Schritt S12 keine Statusinformation ermittelt wird, wird im Anschluß an Schritt S12 das in Fig. 2 dargestellte Zustandsdiagramm, das auch gemäß Fig. 3 abgewandelt sein kann, beginnend mit Schritt S2 durchlaufen.

Wird in Schritt S12 dagegen eine Statusinformation ermittelt, dann wird als nächstes der Schritt S9 ausgeführt. Wie bereits bei Fig. 2 erläutert, wird von der Chipkarte 2 im Schritt S9 der Selbsttest ausgeführt. In dem auf Schritt S9 folgenden Schritt S10 wird das Testergebnis in der Chipkarte 2 gespeichert. Anschließend wird die Chipkarte 2 in Schritt S6 außer Betrieb genommen.

Für die vorstehend beschriebene Ausführung der Schritte S12, S9 und S10 ist es nicht erforderlich, daß die Signalquelle 3 in Datenverbindung zur Chipkarte 2 steht. Es ist lediglich erforderlich, daß der Chipkarte 2 die für den Betrieb benötigte Energie zugeführt wird. Die Energiezufuhr kann beispielsweise durch ein unmoduliertes magnetisches Wechselfeld erfolgen, in das die Chipkarte 2 verbracht wird.

Das Auslesen des in der Chipkarte 2 im Schritt S10 gespeicherten Testergebnisses erfolgt zu einem späteren Zeitpunkt, beispielsweise nach einem Vereinzeln der Chipkarten 2. Da der Datenumfang des Testergebnisses sehr gering ist, kann das Auslesen ohne nennenswerten Zeitverlust im Rahmen einer Einzelkommunikation mit der Chipkarte 2 durchgeführt werden, beispielsweise vor dem Beschreiben der Chipkarte 2 mit individuellen Daten. Insbesondere kann für das Auslesen der übliche bidirektionale Kommunikationsmodus gemäß der Norm ISO/IEC14443-3 eingesetzt werden. In diesem Zusammenhang kann vorgesehen sein, daß die Chipkarte 2 nach Ausführung des Schrittes S10 nicht außer Betrieb genommen wird, sondern in einen Wartezustand versetzt wird. Dies kann dadurch erreicht werden, daß sich an Schritt S10 der Schritt S2 des in Fig. 2 dargestellten Zustandsdiagramms anschließt.

Falls durch das Auslesen des Testergebnisses ermittelt wird, daß bei der Personalisierung ein Fehler aufgetreten ist, wird die Chipkarte 2 einer gesonderten Behandlung unterzogen. Diese kann beispielsweise darin bestehen, daß der bei der Personalisierung aufgetretene Fehler korrigiert wird, falls dies möglich ist oder daß die Chipkarte 2 als unbrauchbar aussortiert wird.

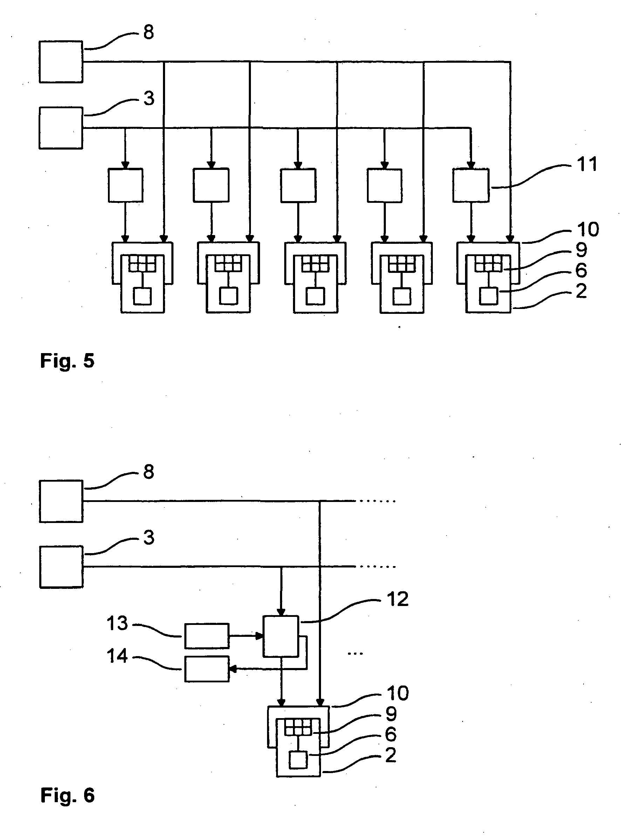

Fig. 5 zeigt eine Prinzipdarstellung eines zweiten Ausführungsbeispiels der erfindungsgemäßen Personalisierungseinrichtung 1 zur Personalisierung von Chipkarten 2. Das in Fig. 5 dargestellte Ausführungsbeispiel der Personalisierungseinrichtung 1 ist für die Personalisierung kontaktbehafteter Chipkarten 2 vorgesehen und weist die Signalquelle 3 und eine Versorgungseinrichtung 8 auf. Die Chipkarten 2 weisen jeweils ein Kontaktfeld 9 auf, das mit dem integrierten Schaltkreis 6 elektrisch leitend verbunden ist.

Die Signalquelle 3 stellt für alle Chipkarten 2 dasslbe Personalisierungssignal bereit. Die Versorgungseinrichtung 8 versorgt die Chipkarten 2 mit einer Versorgungsspannung und einem Taktsignal, die für den Betrieb der Chipkarten 2 erforderlich sind. Wie aus Fig. 5 ersichtlich ist, ist an die Signalquelle 3 und an die Versorgungseinrichtung 8 eine Vielzahl von Chipkarten 2 angeschlossen. Hierzu werden die Kontaktfelder 9 der Chipkarten 2 von je einer Kontaktiereinrichtung 10 elektrisch kontaktiert. Die Kontaktiereinrichtungen 10 dienen lediglich der Herstellung einer galvanischen Verbindung und benötigen keine eigene Elektronik. Die Kontaktiereinrichtungen 10 sind jeweils direkt an die Versorgungseinrichtung 8 und über je einen Zwischenverstärker 11 an die Signalquelle 3 angeschlossen. Durch den Einsatz der Zwischenverstärker 11 lassen sich unerwünschte Rückwirkungen defekter Chipkarten 2 auf das Personalisierungssignal vermeiden. Allerdings sind die Zwischenverstärker 11 bei einer ausreichend leistungsfähigen Signalquelle 3 nicht zwingend erforderlich und können auch entfallen. Ebenso ist es möglich, die Zwischenverstärker 11 in die Kontaktiereinrichtungen 10 zu integrieren.

Die Durchführung der Personalisierung der Chipkarten 2 kann beim zweiten Ausführungsbeispiel der Personalisierungseinrichtung 1 in analoger Weise wie beim ersten Ausführungsbeispiel ablaufen. Dies bedeutet, daß von der Signalquelle 3 dasselbe Personalisierungssignal gleichzeitig an alle Chipkarten 2 übermittelt wird.

Die Chipkarten 2 senden unmittelbar nach Inbetriebnahme, die durch Anlegen der Versorgungsspannung und des Taktsignals erfolgt, ein Answer To Reset-Signal aus und sind dann zum Empfang von Daten bereit. Die Personalisierung der Chipkarten 2 erfolgt gemäß den Schritten S8, S9 und S10 des Zustandsdiagramms der Fig. 2. Wie bei der Personalisierung der kontaktlosen Chipkarten 2 ist auch bei den kontaktbehafteten Chipkarten 2 unabhängig von der Anzahl der gleichzeitig zu personalisierenden Chipkarten 2 nur eine einzige Signalquelle 3 erforderlich. Während der Personalisierung findet keine Datenübertragung von den Chipkarten 2 zur Signalquelle 3 statt. Die maximale Zahl der Chipkarten 2, die gleichzeitig mit der selben Signalquelle 3 personalisiert werden können, hängt somit lediglich von der Leistung der Versorgungseinrichtung 8 sowie der Anzahl der Kontaktiereinrichtungen 10 und der Zwischenverstärker 11 ab. Werden keine Zwischenverstärker 11 verwendet, so stellt die Leistung der Signalquelle 3 einen weiteren limitierenden Faktor dar.

Fig. 6 zeigt eine Prinzipdarstellung einer Weiterbildung des zweiten Ausführungsbeispiels der Personalisierungseinrichtung 1 zur Personalisierung von Chipkarten 2. Die Weiterbildung zeichnet sich dadurch aus, daß für jede Chipkarte 2 ein Vergleicher 12 vorgesehen ist, der in die Datenleitung von der Signalquelle 3 zur Chipkarte 2 geschaltet ist. Wie in Fig. 6 dargestellt, können die Vergleicher 12 die Zwischenverstärker 11 ersetzen. Alternativ dazu besteht die Möglichkeit, daß die Zwischenverstärker 11 in die Vergleicher 12 integriert oder den Vergleichern 12 auf Seite der Signalquelle 3 vorgeschaltet sind. Die Vergleicher 12 prüfen, ob das im Schritt S9 von der jeweils angeschlossenen Chipkarte 2 ermittelte Testergebnis mit einem Referenzwert übereinstimmt. Hierfür können die Vergleicher 12 jeweils sehr einfach aufgebaut sein, wobei eine geringe Zahl von Logikgattern für die Realisierung ausreichen kann.

Die für den Vergleich benötigten Referenzwerte werden vor oder nach der Übertragung des Personalisierungssignals an die Chipkarten 2 in den Vergleichern 12 abgespeichert. Die Referenzwerte können in einem Referenzwertspeicher 13 abgelegt sein, der mit den Vergleichern 12 verbunden ist. Weiterhin werden in den Vergleichern 12 die von den Chipkarten 2 ermittelten Testergebnisse abgespeichert, die den Vergleichern 12 zu diesem Zweck von den Chipkarten 2 übermittelt werden. Die Vergleicher 12 vergleichen die Testergebnisse mit den Referenzwerten und stellen die so ermittelten Vergleichsergebnisse für die weitere Bearbeitung der Chipkarten 2 zur Verfügung. Hierzu können die Vergleicher 12 mit einer Anzeigeeinrichtung 14 verbunden sein, an die die Vergleichsergebnisse übermittelt werden. Falls eines der Vergleichsergebnisse auf einen Fehler bei der Personalisierung schließen läßt, wird die zugehörige Chipkarte 2 einer gesonderten Behandlung zugeführt.

Bei der in Fig. 6 dargestellten Weiterbildung des zweiten Ausführungsbeispiels senden die Chipkarten 2 zwar jeweils eine Rückmeldung. Diese Rückmeldung stellt aber keine Kommunikation mit der Signalquelle 3 dar, da Sie lediglich an den mit der jeweiligen Chipkarte 2 verbunden Vergleicher 12 übermittelt wird und die Signalquelle 3 nicht erreicht. Somit entstehen durch unterschiedliche Rückmeldungen der Chipkarten 2, die zur gleichen Zeit übermittelt werden, keine Probleme, da diese auf getrennten Kanälen übertragen werden und sich nicht gegenseitig beeinflussen.

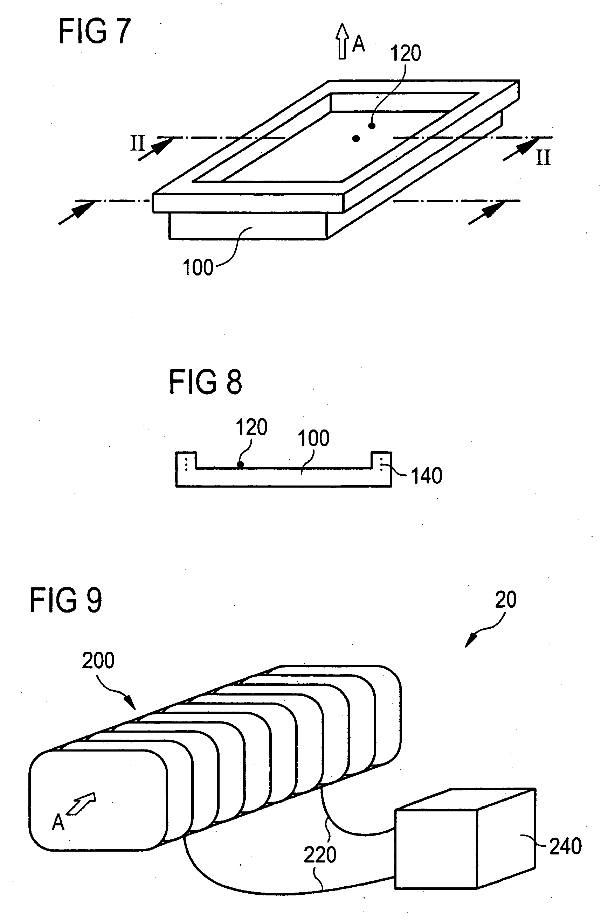

Nachfolgend werden Ausführungsbeispiele der Erfindung genauer dargestellt, die auf der Verwendung von Adapterelementen 100 beruhen. Die Figuren 7 bis 9 betreffen eine erste Ausführungsform.

Figur 7 zeigt eine perspektivische Ansicht eines Adapterelements 100 zum Aufnehmen eines Datenträgers. Der aufzunehmende Datenträger arbeitet grundsätzlich kontaktbehaftet und besitzt entsprechend eine kontaktierende Schnittstelle. Insbesondere für die Initialisierung besitzt er weiterhin Kontakte zum Anschluß einer Kontaktlosschnittstelle in Form einer Spule; diese werden nachfolgend als Antennenkontakte bezeichnet. Das Adapterelement 100 ist eingerichtet, ein Personalisierungssignal mit Personalisierungsdaten zur Personalisierung des Datenträgers 2 von einem Lesegerät kontaktlos entgegenzunehmen. Es ist mit einer Spule 140 versehen. Figur 8 zeigt im Schnitt die Spulendrähte 140. Über die Spule 140 kann auch Energie zu dem Adapterelement 100 übertragen werden. Das Adapterelement 100 ist ferner mit Kontakten 120 aus flexiblem, leitfähigen Material ausgestattet, die mit den Antennenkontakten des aufgenommenen Datenträgers, typischerweise den Kontakten C4 und C8 im Falle eines Datenträgers nach ISO 7816-2), zusammenwirken. Über die Kontakte 120 und die Antennenkontakte des aufgenommenen Datenträgers überträgt das Adapterelement 100 das über die Spule 140 aufgenommene RF-Feld in Form von Strom und Spannung an den Datenträger.

Figur 9 zeigt von einem zugehörigen Lesegerät 20 einen Spulentunnel 200, durch den zu personalisierenden Datenträger 2, die jeweils in einem Adapterelement 100 aufgenommen sind, in Richtung des Pfeils A zum Zwecke ihrer Initialisierung hindurchgeführt werden. Die Übertragung der Daten zur Initialisierung vom Lesegerät 20 über die Adapterelemente 100 zu den Datenträgern 2 erfolgt dabei kontaktlos über eine langgestreckte Antennenspule 200, deren Anschlüsse mit 220 bezeichnet sind und die sich um den Tunnel 200 windet, um ein gleichmäßiges elektromagnetisches Feld zu erzeugen, wobei sich im Tunnel 200 ein Magnetfeld ausbildet, das sich entlang der Tunnellängsachse erstreckt. Die Datenträger sind beim Transport durch den Tunnel 200 vorzugsweise so ausgerichtet, daß die Ebene der Spulen 140 der Adapterelemente 100 senkrecht zu dem im Tunnel 200 vorhandenen Magnetfeld steht; die Adapterelemente 100 stehen beim Transport durch den Tunnel 200 entsprechend vorzugsweise hochkant. So können viele Datenträger gleichzeitig durch die Tunnelspule 200 hindurchgeführt und dementsprechend gleichzeitig oder zumindest zeitlich überlappend initialisiert werden. Selbstverständlich können Datenträger, die bauartbedingt bereits kontaktlos über den Spulentunnel mit dem Lesegerät kommunizieren können, die also ihrerseits eine Antennenspule besitzen, ohne die vorgenannten Adapterelemente 100 durch den Spulentunnel 200 zum Zwecke ihrer Initialisierung hindurchgeführt werden.

Die gleichzeitige oder zumindest zeitlich überlappende Personalisierung, insbesondere Initialisierung der Mehrzahl von Datenträgern erfolgt bei dieser Ausführungsform wie auch in allen nachfolgend erläuterten Ausführungsformen mittels eines Einwegprotokolls, bei dem keine Kommunikation vom Datenträger zum Lesegerät vorgesehen ist. Dadurch kann die Mehrzahl von Datenträgern im Spulentunnel 200 demselben Datenstrom des Lesegerätes 20 ausgesetzt werden. In Figur 9 bezeichnet die Bezugsziffer 240 die dazu notwendige Datenverarbeitungseinrichtung des Lesegeräts 20. Das Lesegerät 20 muß keine Antwortdaten der Datenträger abwarten und / oder verarbeiten. Das Einwegprotokoll wird nach Abschluß der Initialisierung auf dem Datenträger deaktiviert, damit bei der anschließenden Benutzung des Datenträgers wieder das gewöhnliche Kommunikationsprotokoll zum Einsatz kommen kann, welches auch Antwortdaten des Datenträgers auf eingehende Kommandos erlaubt. Verschiedene Ausprägungen des Einwegprotokolls bezüglich Aktivierung und Speicherung sind möglich. Einerseits kann das Protokoll im ROM des Datenträgers angesiedelt sein und implizit aktiviert werden, was keine Vorinitialisierung des Datenträgers mit dem gewöhnlichen, später in normaler Benutzung gebräuchlichen Kommunikationsprotokoll erfordert. Andererseits ist ein explizites Aufbringen und Aktivieren des Protokolls, etwa bei der Hardware-Prüfung des Datenträgers, möglich, wodurch Speicherplatz im ROM gespart werden kann.

Die Initialisierungsdaten werden in Form von Datenblöcken vom Lesegerät zu den Datenträgern übertragen. Vorteilhafterweise sollte im Einwegprotokoll die Größe der übertragenen Datenblöcke auf die Schreibeigenschaften und Transportkapazitäten der beteiligten Hardware abgestimmt sein. Dabei kann das Protokoll eine Übertragung der Datenblöcke zur Initialisierung in beliebiger Reihenfolge unterstützten, wodurch eine zeitlich verschränkte Initialisierung verschiedener Mengen von Datenträgern ermöglicht wird. Vorzugsweise werden die Daten zur Initialisierung verschlüsselt vom Lesegerät zu den Datenträgern übertragen und erst auf den Datenträgern wieder entschlüsselt. Die Prüfung der Korrektheit der Initialisierung kann datenträgerintern nach Abschluß der Initialisierung stattfinden, beispielsweise mittels Prüfsummen.

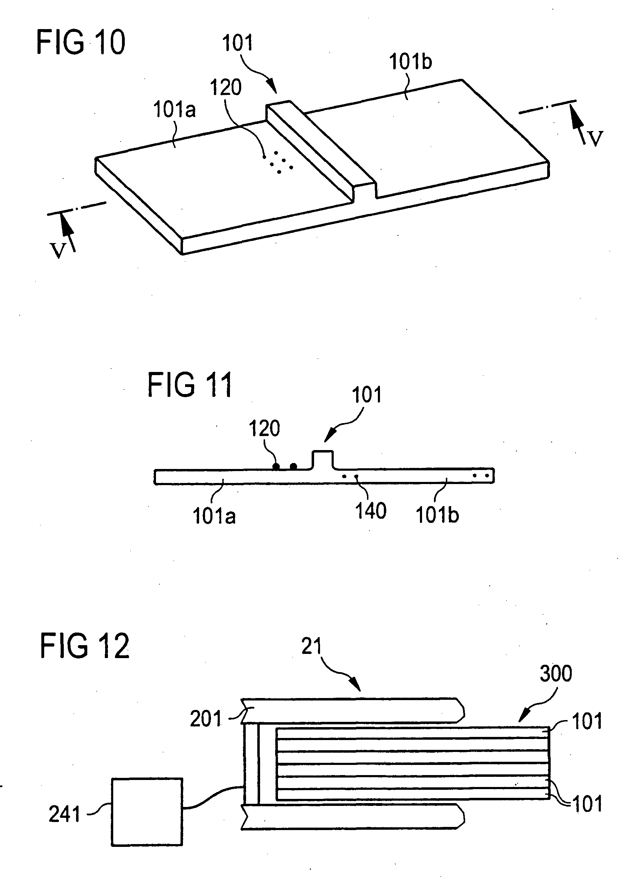

Die Figuren 10 bis 12 betreffen eine zweite Ausführungsform der Erfindung. Figur 10 zeigt eine perspektivische Ansicht eines Adapterelements 101 zur Aufnahme eines zu initialisierenden Datenträgers, der wiederum zum Anschluß einer Kontaktlosschnittstelle vorgesehene Kontakte aufweist. Wie bei der ersten Ausführungsform erfolgt die Übertragung von Daten zur Initialisierung kontaktlos von einem Lesegerät zu dem Adapterelement 101, welches das zugeführte RF-Feld in Form von Strom und Spannung an die Antennenkontakte des Datenträgers überträgt.

Dazu umfaßt das Adapterelement 101 zwei Hälften 101a und 101b. Die eine Hälfte 101b umfaßt eine Spule 140 zur kontaktlosen Kommunikation mit dem Lesegerät. In Figur 11 sind die Spulendrähte 140 im Schnitt zu sehen. Die andere Hälfte 101a des Adapterelements 101 besitzt Kontakte 120 aus flexiblem, leitfähigen Material, die mit den Antennenkontakten des aufgenommenen Datenträgers, d.h. etwa mit den Kontakten C4 und C8 im Falle eines Datenträgers nach ISO 7816-2, zusammenwirken.

Figur 12 zeigt eine Seitenansicht einer Helmholtz-Spule 201 eines Lesegeräts 21 (mit Datenverarbeitungseinrichtung 241) zum gleichzeitigen Initialisieren einer Mehrzahl von Datenträgern, die jeweils in solchen Adapterelementen 101 aufgenommen sind und als ein Stapel 300 der Helmholtz-Spule 201 zugeführt werden. Die Helmholtz-Spule 201 erzeugt ein zur gleichzeitigen Initialisierung aller Datenträger geeignetes gleichmäßiges Feld, welches über die Spulen 140 in die Adapterelemente 101 einkoppelt. Auch Energie kann so zusätzlich zu den Initialisierungsdaten über die Adapterelemente auf die darin aufgenommenen Datenträger übertragen werden. Datenträger, die bauartbedingt bereits kontaktlos über die Helmholtz-Spule 201 mit dem Lesegerät kommunizieren können, die also ihrerseits eine Antennenspule besitzen, können ohne spezielle Adapterelemente in die Helmholtz-Spule 201 zur Initialisierung eingeführt werden.

Die erste Ausführungsform der Erfindung erlaubt ohne weiteres die gleichzeitige Initialisierung von z.B. 500 Datenträgern, die zweite Ausführungsform die gleichzeitige Initialisierung von z.B. 50 Datenträgern.

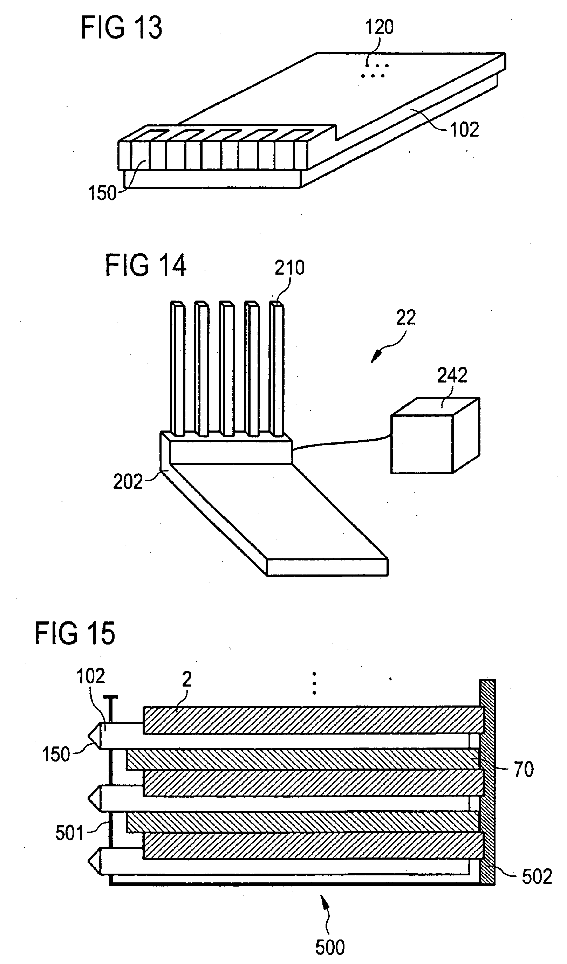

Figuren 13 bis 15 betreffen eine dritte Ausführungsform der Erfindung. Figur 13 zeigt eine perspektivische Ansicht eines Adapterelements 102, das eingerichtet ist, einen Datenträger aufzunehmen, der zur kontaktbehafteten Kommunikation bestimmt ist, beispielsweise einen Datenträger nach ISO 7816-2. Dazu besitzt das Adapterelement 102 Kontakte 120 aus flexiblem, leitfähigen Material, um mit den Kontakten C1, C2, C3, C5 und C7 (gemäß ISO 7816-2) eines aufgenommenen Datenträgers zur Kommunikation kontaktbehaftet zusammenzuwirken. Desweiteren ist das Adapterelement 102 eingerichtet, Daten zur Initialisierung kontaktbehaftet von einer Anschlußvorrichtung 202 eines Lesegeräts 22 zu empfangen, welches in perspektivischer Ansicht in Figur 14 gezeigt ist. Dazu besitzt das Adapterelement 102 Kontaktflächen 150, die beispielsweise als Federbleche ausgebildet sein können. Das Adapterelement 102 mit dem darin aufgenommenen Datenträger wird dann an die Anschlußvorrichtung 202 des Lesegerätes 22 angeschlossen, dessen Datenverarbeitungseinrichtung mit der Bezugsziffer 242 bezeichnet ist. Die Anschlußvorrichtung 202 besitzt Kontaktbalken 210, die mit den Kontaktflächen 150 einer Mehrzahl von Adapterelementen 102 zur kontaktbehafteten Kommunikation gleichzeitig zusammenwirken können.

Figur 15 illustriert in Seitenansicht einen Behälter 500, mittels dessen eine Mehrzahl solcher Adapterelemente 102 mit darin aufgenommenen Datenträgern 2 der Anschlußvorrichtung 202 als Stapel zugeführt werden kann. Dabei wird beim Einsetzen der Adapterelemente 102 in den Behälter 500 zwischen einen Datenträger 2 und das benachbarte Adapterelement 102 jeweils eine Füllschicht 70 angeordnet. Die Datenträger 2 stoßen an eine gemeinsame Rückwand 502 des Behälters 500 und sind damit einheitlich ausgerichtet. An der vorderen Wand 501 des Behälters 500 ragen die Kontaktflächen 150 der Adapterelemente 102 aus dem Behälter 500 heraus, um mit den Kontaktbalken 210 der Anschlußvorrichtung 202 zur Kommunikation kontaktbehaftet zusammenwirken zu können.

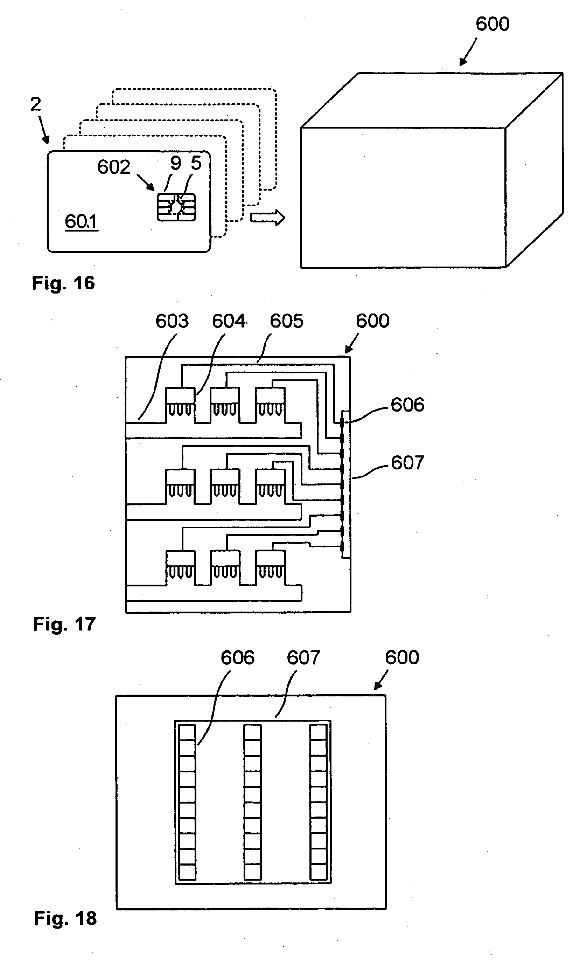

Die Figuren 16 bis 25 zeigen eine alternative Ausführungsform zur dritten Ausführungsform der Erfindung.

Fig. 16 zeigt zunächst eine schematische Darstellung des Prinzips der alternativen Ausführungsform. Dargestellt sind mehrere tragbare Datenträger 2 in Form von kontaktbehaftet arbeitenden Chipkarten sowie ein Transportmagazin 600 zur Aufnahme der Chipkarten 2. Eine der Chipkarten 2 ist mit durchgezogenen Linien, die weiteren mit gestrichelten Linien dargestellt. Dadurch soll zum Ausdruck gebracht werden, daß das Transportmagazin 600 wenigstens eine Chipkarte 2, in der Regel jedoch mehrere Chipkarten 2 aufnehmen kann.

Die Chipkarten 2 weisen jeweils einen Kartenkörper 601 auf, in den ein Chipmodul 602 implantiert ist. Der Kartenkörper 601 kann beispielsweise aus Kunststoff bestehen und durch Lamination oder spritztechnisch hergestellt sein. Das Chipmodul 602 weist einen integrierten Schaltkreis 6 und ein Kontaktfeld 9 auf, das mit dem integrierten Schaltkreis 6 elektrisch leitend verbunden ist. Anstelle eines einzigen Chipmoduls 602 können pro Chipkarte 2 auch mehrere Chipmodule 602 vorgesehen sein.

Der Aufbau des Transportmagazins 600 ist in Fig.16 nicht näher dargestellt und wird anhand der Fig. 17 bis 23 im einzelnen erläutert.

Fig.17 zeigt den inneren Aufbau eines Ausführungsbeispiels des Transportmagazins 600 in einer schematischen Darstellung. Beim dargestellten Ausführungsbeispiel weist das Transportmagazin 600 mehrere Schächte 603 auf, die je eine Chipkarte 2 aufnehmen können. Anstelle der in Fig. 17 dargestellten Schächte 603 kann auch eine andere Zahl von Schächten 603 vorgesehen sein; es ist auch möglich, lediglich einen Schacht 603 vorzusehen.

Benachbart zu jedem Schacht 603 sind ein oder mehrere Kontaktiereinheiten 604 angeordnet, die quer zum Schacht 603 beweglich sind. Die Zahl an Kontaktiereinheiten 604 pro Schacht 603 kann auch von der Darstellung der Fig. 17 abweichen. Die Kontaktiereinheiten 604 dienen der Kontaktierung der Kontaktfelder 9 der Chipkarten 2 und sind über Zuleitungen 605 mit Kontakten 606 verbunden. Die Kontakte 606 sind Bestandteile einer Anschlußbuchse 607 auf der Rückseite des Transportmagazins 600, die anhand von Fig. 18 näher erläutert wird.

Fig. 18 zeigt die Rückseite eines Ausführungsbeispiels des Transportmagazins 600 in einer schematischen Darstellung. Die in Fig. 18 dargestellten Kontakte 606 sind mit den Kontaktiereinheiten 604 verbunden und zu Gruppen aneinandergereiht, wobei die einzelnen Kontakte 606 jeweils gegeneinander elektrisch isoliert sind. Die Gruppen können beispielsweise so ausgebildet werden, daß je eine Gruppe den Kontaktiereinheiten 604 je eines Schachtes 603 zugeordnet ist.

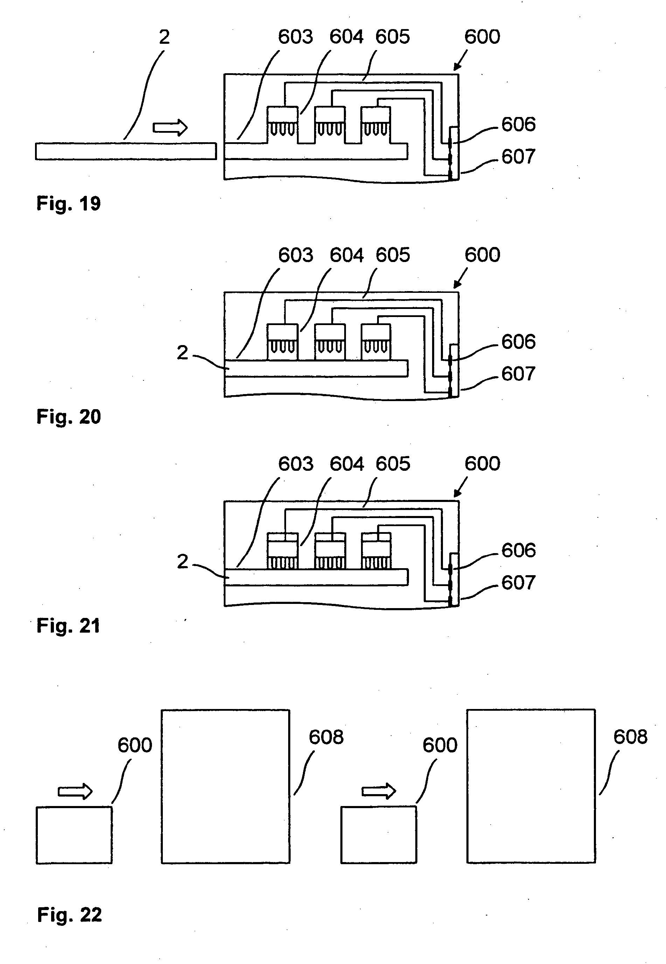

Anhand der Fig. 19 bis 21 wird erläutert, wie die Chipkarten 2 kontaktiert werden und dadurch elektrisch leitende Verbindungen zwischen den integrierten Schaltkreisen 6 der Chipkarten 2 und den Kontakten 606 des Transportmagazins 600 ausgebildet werden. Die in den Fig. 19 bis 21 dargestellten Momentaufnahmen zeigen aus Gründen der Übersicht ist jeweils nur ein Teilbereich des Transportmagazins 600 der Fig.17.

Zu dem in Fig. 19 gezeigten Zeitpunkt ist die Chipkarte 2 noch nicht in den dargestellten Schacht 603 des Transportmagazins 600 eingeschoben. Die Kontaktiereinheiten 604 befinden sich jeweils in Ihrer Ruheposition in einem vorgegebenen Abstand zum Schacht 603.

Zu dem in Fig. 20 dargestellten Zeitpunkt ist die Chipkarte 2 vollständig in den dargestellten Schacht 603 des Transportmagazins 600 eingeführt. Die Kontaktiereinheiten 604 nehmen unverändert gegenüber Fig. 19 jeweils ihre Ruheposition ein und sind somit von der Chipkarte 2 beabstandet. Folglich kommt es noch nicht zu einer Kontaktierung der Chipkarte 2 durch die Kontaktiereinheiten 604. Die Kontaktiereinheiten 604 werden dann der Chipkarte 2 angenähert bis sie berührend an den Kontaktfeldern 9 der Chipkarte 2 anliegen. Dies ist in Fig. 21 dargestellt.

In Fig. 21 befinden sich die Kontaktiereinheiten 604 jeweils nicht mehr in ihrer Ruheposition, sondern in ihrer Arbeitsposition. Die Arbeitsposition zeichnet sich dadurch aus, daß die Kontaktiereinheiten 604 berührend an den Kontaktfeldern 9 der Chipkarte 2 anliegen und dadurch eine elektrisch leitende Verbindung zwischen den integrierten Schaltkreisen 6 der Chipkarte 2 und den Kontakten 606 des Transportmagazins 600 ausbilden. Dies gilt gleichermaßen für alle Chipkarten 2, die in die Schächte 603 des Transportmagazins 600 eingeführt sind und auch für den Fall, daß diese Chipkarten 2 jeweils nur ein einziges Chipmodul 602 aufweisen und somit jeweils nur von einer Kontaktiereinheit 604 kontaktiert werden.

Fig. 22 zeigt ein Ausführungsbeispiel einer Produktionsanlage zur Personalisierung von Chipkarten 2 in einer stark vereinfachten Blockdarstellung. Die Produktionsanlage weist mehrere Bearbeitungsstationen 608 zur Personalisierung der Chipkarten 2 auf. Bei den Bearbeitungsstationen 608 kann es sich beispielsweise um eine Teststation zur Prüfung der integrierten Schaltkreise 6 der Chipkarten 2, um eine Initialisierungs- bzw. Personalisierungsstation zum Einschreiben von Personalisierungsdaten in die integrierten Schaltkreise 6 der Chipkarten 2, um eine Laserbeschriftungsstation zum Beschriften der Kartenkörper 601 der Chipkarten 2 usw. handeln.

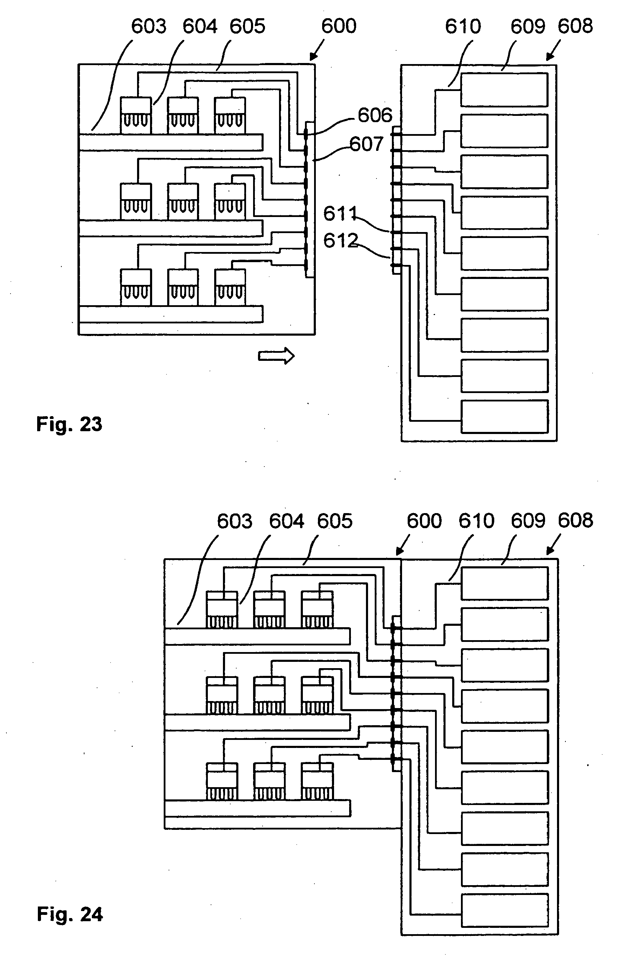

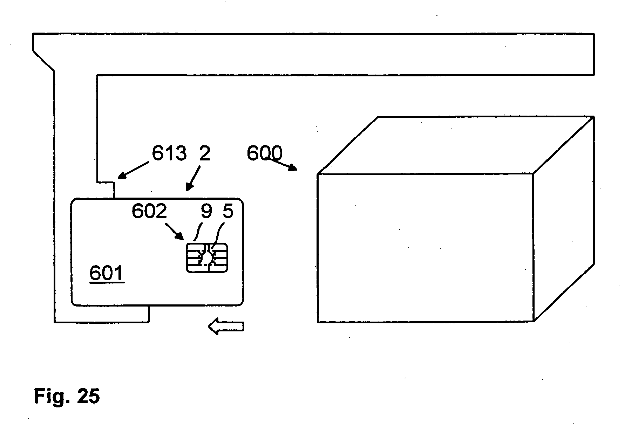

Die Chipkarten 2 werden in den Transportmagazinen 600 von einer Bearbeitungsstation 608 zur nächsten transportiert. Abhängig von der Art der Bearbeitungsstation 608 verbleiben die Chipkarten 2 während der Bearbeitung durch die Bearbeitungsstation 608 in den Transportmagazinen 600 oder werden vor der Bearbeitung aus den Transportmagazinen 600 entnommen. Die Bearbeitung kann insbesondere dann in den Transportmagazinen 600 erfolgen, wenn es sich um eine elektronische Bearbeitung handelt, d. h. wenn für die Bearbeitung lediglich eine elektrische Kontaktierung der integrierten Schaltkreise 6 der Chipkarten 2 erforderlich ist. Muß dagegen die Oberfläche der Chipkarten 2 zugänglich sein, wie dies beispielsweise bei einer Laserbeschriftung oder einer anderen optischen Bearbeitung der Fall ist, so werden die Chipkarten 2 in der Regel aus den Transportmagazinen 600 entnommen. Eine Bearbeitung innerhalb der Transportmagazine 600 ist in den Fig. 23 und 24 dargestellt. Eine Entnahme der Chipkarten 2 aus den Transportmagazinen 600 zeigt Fig. 25.

Fig. 23 zeigt den inneren Aufbau eines Ausführungsbeispiels eines Transportmagazins 600 und einer Bearbeitungsstation 608 kurz vor einer elektronischen Bearbeitung der Chipkarten 2 innerhalb des Transportmagazins 600 in einer schematischen Darstellung. Zum dargestellten Zeitpunkt sind die Chipkarten 2 in den Schächten 603 des Transportmagazins 600 angeordnet, wobei die Kontaktiereinheiten 604 des Transportmagazins 600 allerdings die Kontaktfelder 9 der Chipkarten 2 nicht berühren. Bei der Bearbeitungsstation 608 handelt es sich um eine Initialisierungs- bzw. Personalisierungsstation mit einer Vielzahl von Kartenlesern 609. Die Kartenleser 609 sind über Zuleitungen 610 jeweils mit Kontakten 611 eines Steckers 612 verbunden. Der Stecker 612 ist so ausgebildet, daß er zur Anschlußbuchse 607 des Transportmagazins 600 paßt, wobei zudem die Anordnung der Kontakte 611 innerhalb des Steckers 612 auf die Anordnung der Kontakte 606 innerhalb der Anschlußbuchse 607 abgestimmt ist. Dies bedeutet, daß der Stecker 612 bei einer weiteren Annäherung des Transportmagazins 600 an die Bearbeitungsstation 608 so in die Anschlußbuchse 607 eingeführt wird, daß Kontakte 611 des Steckers 612 gegen die Kontakte 606 der Anschlußbuchse 607 gepreßt werden. Gleichzeitig werden die Kontaktiereinheiten 604 des Transportmagazins 600 beispielsweise beim Einführen des Steckers 612 in die Anschlußbuchse 607 den Kontaktfeldern 9 der Chipkarten 2 angenähert, bis sie diese schließlich berühren. Der Zustand nach dem Einführen des Steckers 612 der Bearbeitungsstation 608 in die Anschlußbuchse 607 des Transportmagazins 600 ist in Fig. 24 dargestellt.

Fig. 23 zeigt schematisch den inneren Aufbau des Transportmagazins 600 und der Bearbeitungsstation 608 der Fig. 23 während der elektronischen Bearbeitung der Chipkarten 2 innerhalb des Transportmagazins 600. Die Kontakte 611 des Steckers 612 der Bearbeitungsstation 608 berühren die Kontakte 606 der Anschlußbuchse 607 des Transportmagazins 600. Außerdem berühren die Kontaktiereinheiten 604 des Transportmagazins 600 die Kontaktfelder 9 der Chipkarten 2. Somit besteht insgesamt eine elektrisch leitende Verbindung zwischen den integrierten Schaltkreisen 6 der Chipkarten 2 und den Kartenlesern 609 der Bearbeitungsstation 608, die über die Kontaktfelder 9 der Chipkarten 2, die Kontaktiereinheiten 604 des Transportmagazins 600, die Zuleitungen 605 zwischen den Kontaktiereinheiten 604 und den Kontakten 606 des Transportmagazins 600, die Kontakte 611 der Bearbeitungsstation 608 und die Zuleitungen 610 zwischen den Kontakten 611 und den Kartenlesern 609 der Bearbeitungsstation 608 verläuft. Es ist daher beispielsweise möglich, eine Initialisierung oder eine Personalisierung der Chipkarten 2 durchzuführen ohne die Chipkarten 2 aus den Transportmagazinen 600 zu entnehmen.

Da der Transport der Chipkarten 2 durch die Produktionsanlage innerhalb der Transportmagazine 600 erfolgt und der elektrische Kontakt zu den Bearbeitungsstationen 608 über die Transportmagazine 600 hergestellt wird, sind die äußeren Abmessungen der Chipkarten 2 sowie die Lage und Ausbildung der Kontaktfelder 6 ohne Einfluß auf die Ausbildung der Produktionsanlage mit Ausnahme der Transportmagazine 600. Mit der gleichen Produktionsanlage können dadurch Chipkarten 2 unterschiedlicher Formate bearbeitet werden. Hierzu müssen lediglich geeignete Transportmagazine 600 eingesetzt werden. Solange die Chipkarten 2 ausschließlich innerhalb der Transportmagazine 600 bearbeitet werden, sind an der Produktionsanlage keine Modifikationen erforderlich. Werden die Chipkarten 2 während der Produktion aus den Transportmagazinen 600 entnommen, sind für unterschiedliche Chipkartenformate Modifikationen erforderlich, die aber in der Regel mit vertretbarem Aufwand durchgeführt werden können. Ein Beispiel für eine Entnahme der Chipkarten 2 aus den Transportmagazinen 600 ist in Fig. 25 dargestellt.

Fig. 25 zeigt schematisch ein Ausführungsbeispiel einer Entnahmevorrichtung 613 für die Chipkarten 2. Die Entnahmevorrichtung 613 kann beispielsweise in Form eines Greifers ausgebildet sein und ist immer dann erforderlich, wenn die Chipkarten 2 aus den Transportmagazinen 600 entnommen oder in diese eingeführt werden müssen. Dies ist beispielsweise dann der Fall, wenn die Chipkarten 2 einer Bearbeitungsstation 608 zugeführt werden sollen, die eine optische Bearbeitung der Chipkarten 2, beispielsweise eine Laserbeschriftung, durchführen. Im Falle einer Umstellung der Produktionsanlage auf ein anderes Chipkartenformat ist die Entnahmevorrichtung 613 entsprechend zu modifizieren.

## Patentansprüche

1. Verfahren zur parallelen Personalisierung einer Mehrzahl von tragbaren Datenträgern (2, 50), die jeweils einen integrierten Schaltkreis (6) zum Speichern und/oder Verarbeiten von Informationen sowie einen nichtflüchtigen Speicher aufweisen, wobei an die tragbaren Datenträger (2) jeweils ein Personalisierungssignal mit Personalisierungsdaten übertragen wird, und die übertragenen Personalisierungsdaten in den nichtflüchtigen Speicher des integrierten Schaltkreises (6) abgespeichert werden, wobei das jeweilige Personalisierungssignal gleichzeitig oder zumindest zeitlich überlappend von einem Lesegerät (3, 4; 20, 21, 22) an mehrere tragbare Datenträger (2) übertragen wird, **dadurch gekennzeichnet, daß** das gleiche Personalisierungssignal im Rahmen einer unidirektionalen Signalübertragung übertragen wird, bei dem keine Kommunikation von den Datenträgern (2) zum Lesegerät (3, 4; 20, 21, 22) vorgesehen ist.

2. Verfahren nach Anspruch 1, **dadurch gekennzeichnet, daß** das Personalisierungssignal von dem Lesegerät (20; 21) kontaktlos übertragen wird.

3. Verfahren gemäß Anspruch 2, **dadurch gekennzeichnet, daß** die Daten von dem tragbaren Datenträger (2) kontaktlos empfangen werden.

4. Verfahren nach Anspruch 2, **dadurch gekennzeichnet, daß** mehrere tragbare Datenträger (2) innerhalb eines von der Personalisierungseinrichtung (1) erzeugten magnetischen Wechselfeldes angeordnet werden.

5. Verfahren gemäß Anspruch 2, **dadurch gekennzeichnet, daß** das Personalisierungssignal von einem oder mehreren Adapterelementen (100; 101) kontaktlos empfangen wird, wobei das eine oder die mehreren Adapterelemente (100;101) jeweils einen Datenträger (50) aufnehmen, und von dem Adapterelement bzw. den Adapterelementen (100; 101) über an dem Datenträger (2) zum Anschluß einer Kontaktlosschnittstelle bestimmte Kontakte an den aufgenommenen Datenträger (2) übertragen werden.

6. Verfahren nach Anspruch 2, **dadurch gekennzeichnet, daß** die Mehrzahl der Datenträger (2) zur Übertragung der Personalisierungsdaten vom Lesegerät (20) zu den Datenträgern (50) durch einen Spulentunnel (200) des Lesegeräts (20) hindurchgeführt wird.

7. Verfahren nach Anspruch 2, **dadurch gekennzeichnet, daß** die Mehrzahl der Datenträger (2) zur Übertragung der Personalisierungsdaten vom Lesegerät (21) zu den Datenträgern (2) in eine Helmholtz-Spule (201) des Lesegeräts (21) eingeführt wird.

8. Verfahren nach einem der vorhergehenden Ansprüche, **dadurch gekennzeichnet, daß** die tragbaren Datenträger (2) stapelförmig angeordnet werden.

9. Verfahren nach Anspruch 1, **dadurch gekennzeichnet, daß** die Daten zur Personalisierung von dem Lesegerät (22) kontaktbehaftet übertragen werden.

10. Verfahren nach Anspruch 9, **dadurch gekennzeichnet, daß** die Daten vom Datenträger (50) kontaktbehaftet empfangen werden.

11. Verfahren nach Anspruch 9, **dadurch gekennzeichnet, daß** zur Übertragung des Personalisierungssignals elektrisch leitende Verbindungen zwischen dem Lesegerät (3; 22) und den tragbaren Datenträgern (2) ausgebildet werden.

12. Verfahren nach Anspruch 9, **dadurch gekennzeichnet, daß** je wenigstens ein tragbarer Datenträger (2) mittels einer Transportvorrichtung (600), die den Kontaktbereich (9) des tragbaren Datenträgers (2) mittels einer Kontaktiereinheit (604) wenigstens zeitweise elektrisch kontaktiert, zu einer Bearbeitungsstation (608) transportiert wird, die zur Übermittlung von Personalisierungsdaten an den tragbaren Datenträger (2) eingerichtet ist.

13. Verfahren nach Anspruch 12, **dadurch gekennzeichnet, daß** die Personalisierung des tragbaren Datenträgers (2) innerhalb des Zeitraums, in dem die Transportvorrichtung (600) den Kontaktbereich (9) elektrisch kontaktiert, durchgeführt wird.

14. Verfahren nach Anspruch 12, **dadurch gekennzeichnet, daß** die Transportvorrichtung (600) von einer der Bearbeitungsstationen (608) zeitweise elektrisch kontaktiert wird und dadurch eine elektrisch leitende Verbindung zwischen dieser Personalisierungsstation (12) und wenigstens einer Kontaktiereinheit (8) der Transportvorrichtung (600) ausgebildet wird.

15. Verfahren nach Anspruch 12, **dadurch gekennzeichnet, daß** die Kontaktiereinheit (604) der Transportvorrichtung (600) für einen Teil des Zeitintervalls, in dem die Transportvorrichtung (2) den tragbaren Datenträger (2) aufnimmt, in eine Ruheposition überführt wird, in der die Kontaktiereinheit (604) den Kontaktbereich (9) des tragbaren Datenträgers (2) nicht kontaktiert.

16. Verfahren nach Anspruch 11, **dadurch gekennzeichnet, daß** sich die Kontaktiereinheit (604) der Transportvorrichtung (600) während des Transports wenigstens zeitweise in der Ruheposition befindet.

17. Verfahren nach Anspruch 12, **dadurch gekennzeichnet, daß** der tragbare Datenträger (2) in einen Schacht (603) der Transportvorrichtung (600) eingeführt wird.

18. Verfahren nach Anspruch 9, **dadurch gekennzeichnet, daß** das Personalisierungssignal von einer Mehrzahl von Adapterelementen (102) kontaktbehaftet empfangen werden, die jeweils einen Datenträger (2) aufnehmen, und von dem Adapterelement (102) kontaktbehaftet an den jeweiligen aufgenommenen Datenträger (50) übertragen wird.

19. Verfahren nach Anspruch 1, **dadurch gekennzeichnet, daß** nach der Übertragung des Personalisierungssignals eine vorgebbare Zeitspanne abgewartet wird und dann ein weiteres Personalisierungssignal übertragen wird.

20. Verfahren nach Anspruch 19, **dadurch gekennzeichnet, daß** die Zeitspanne wenigstens so groß gewählt wird wie eine für die Verarbeitung des Personalisierungssignals durch die tragbaren Datenträger (2) erwartete Verarbeitungszeit.

21. Verfahren gemäß einem der vorhergehenden Ansprüche, **dadurch gekennzeichnet, daß** Daten zur Initialisierung in Form von Datenblöcken übertragen werden.

22. Verfahren gemäß Anspruch 21, **dadurch gekennzeichnet, daß** die zu übertragenden Datenblöcke in beliebiger Reihenfolge übertragen werden.

23. Verfahren nach Anspruch 1, **dadurch gekennzeichnet, daß** die Personalisierungsdaten verschlüsselt übertragen und auf dem Datenträger (2) entschlüsselt werden.

24. Verfahren nach Anspruch 1, **dadurch gekennzeichnet, daß** von den tragbaren Datenträgern (2) die aus dem übertragenen Personalisierungssignal ermittelten Personalisierungsdaten und/oder ein im Rahmen der Personalisierung im integrierten Schaltkreis (6) erzeugter Speicherinhalt geprüft werden.

25. Verfahren gemäß Anspruch 24, **dadurch gekennzeichnet, daß** die Prüfung mittels Prüfsummen erfolgt.

26. Verfahren nach Anspruch 24, **dadurch gekennzeichnet, daß** die tragbaren Datenträger (2) zur Prüfung des im Rahmen der Personalisierung im integrierten Schaltkreis (6) erzeugten Speicherinhalts einem unmodulierten Feld ausgesetzt werden.

27. Verfahren nach Anspruch 24, **dadurch gekennzeichnet, daß** das Ergebnis der Prüfung jeweils in den tragbaren Datenträgern (2) gespeichert und/oder von den tragbaren Datenträgern (2) ausgegeben wird.

28. Verfahren nach Anspruch 24, **dadurch gekennzeichnet, daß** die weitere Bearbeitung der tragbaren Datenträger (2) jeweils vom Ergebnis der Prüfung abhängig gemacht wird.

29. Verfahren nach Anspruch 24, **dadurch gekennzeichnet, daß** das Ergebnis der Prüfung an eine Testeinrichtung (12) ausgegeben wird, die das Ergebnis der Prüfung insbesondere durch einen Vergleich mit einem Referenzwert auswertet.

30. Verfahren nach Anspruch 1, **dadurch gekennzeichnet, daß** das Personalisierungssignal während der Übertragung von dem Lesegerät (3) zu den tragbaren Datenträgern (2) verstärkt wird.

31. Vorrichtung zur parallelen Personalisierung einer Mehrzahl von tragbaren Datenträgern (2), die jeweils wenigstens einen integrierten Schaltkreis (6) zum Speichern und/oder Verarbeiten von Informationen sowie einen nichtflüchtigen Speicher aufweisen, mit einem Lesegerät (3, 4; 20, 21, 22) zur Erzeugung eines Personalisierungssignals, und zur Übertragung des
Personalisierungssignals, wobei das Lesegerät (3, 4; 20, 21, 22) dazu eingerichtet ist, das Personalisierungssignal an eine Mehrzahl von Datenträgern (2) gleichzeitig oder zumindest zeitlich überlappend zu übertragen, **dadurch gekennzeichnet, daß** das Lesegerät (20; 21; 22) eingerichtet ist, die Personalisierung mittels eines Einwegprotokolls durchzuführen, in dem keine Kommunikation von den Datenträgem (50) zum Lesegerät (20; 21; 22) vorgesehen ist, und weiter dazu eingerichtet ist das gleiche Personalisierungssignal an die Mehrzahl von Datenträgern (2) zu übertragen.

32. Vorrichtung gemäß Anspruch 31, **dadurch gekennzeichnet, daß** das Lesegerät (3; 20, 21, 22) eine Kontaktlosschnittstelle (200; 201) zum kontaktlosen Übertragen eines Personalisierungssignals umfaßt.

33. Vorrichtung nach Anspruch 32, **dadurch gekennzeichnet, daß** die Kontaktlosschnittstelle eine Antenneneinrichtung (4) ist.

34. Vorrichtung nach Anspruch 33, **dadurch gekennzeichnet, daß** innerhalb der Übertragungsreichweite der Antenneneinrichtung (4) ein Aufnahmebereich (5) zur Aufnahme mehrerer tragbarer Datenträger (2) ausgebildet ist.

35. Vorrichtung zur Personalisierung tragbarer Datenträger (2), die jeweils wenigstens einen integrierten Schaltkreis (6) zum Speichern und/oder Verarbeiten von Informationen aufweisen, mit einer Signalquelle (3) zur Erzeugung eines Personalisierungssignals, gemäß Anspruch 30, **dadurch gekennzeichnet, daß** das Lesegerät (22) Kontaktanschlüsse (210) zum kontaktbehafteten Übertragen von Daten zur Initialisierung umfaßt.

36. Vorrichtung nach Anspruch 35, **dadurch gekennzeichnet, daß** das Lesegerät (3; 22) mehrere Kontaktiereinrichtungen (10) zur elektrischen Kontaktierung je mindestens eines tragbaren Datenträgers (2) angeschlossen sind.

37. Vorrichtung nach Anspruch 35, **dadurch gekennzeichnet, daß** die Kontaktiereinrichtungen (10) jeweils über einen Zwischenverstärker (11) an das Lesegerät (3) angeschlossen sind.

38. Vorrichtung nach Anspruch 35, **dadurch gekennzeichnet, daß** an die Kontaktiereinrichtungen (10) jeweils eine Testeinrichtung (12) angeschlossen ist, die einen von dem kontaktierten tragbaren Datenträger (2) ausgegebenen Wert auswertet.

39. Vorrichtung nach Anspruch 35, **gekennzeichnet durch** mindestens ein Adapterelement (100;101;102), welches eingerichtet ist, mindestens einen Datenträger (2) aufzunehmen, und eine erste Schnittstelle (140; 150) besitzt, um mit dem Lesegerät zu kommunizieren, und eine zweite Schnittstelle (120) besitzt, um mit dem mindestens einen aufzunehmenden Datenträger (50) zu kommunizieren.

40. Vorrichtung nach Anspruch 35, **dadurch gekennzeichnet, daß** das Adapterelement (100; 101) eine Kontaktlosschnittstelle (140) zum kontaktlosen Kommunizieren mit dem Lesegerät (20; 21) umfaßt.

41. Vorrichtung nach Anspruch 35, **dadurch gekennzeichnet, daß** das Adapterelement (101) in einer Hälfte (101b) eine Antenne umfaßt und in einer anderen Hälfte (101a) eine Aufnahmeeinrichtung zum Aufnehmen mindestens eines Datenträgers (2).

42. Vorrichtung nach Anspruch 39, **dadurch gekennzeichnet, daß** die erste Schnittstelle (140, 150) einen oder mehrere Kontaktanschlüsse umfaßt.

43. Vorrichtung nach Anspruch 39, **dadurch gekennzeichnet, daß** die zweite Schnittstelle (120) eine Kontaktlosschnittstelle umfaßt.

44. Vorrichtung nach Anspruch 39, **dadurch gekennzeichnet, daß** die zweite Schnittstelle (120) einen oder mehrere Kontaktanschlüsse umfaßt.

45. Vorrichtung nach Anspruch 39, **dadurch gekennzeichnet, daß** über die zweite Schnittstelle (120) in Form von Strom und Spannung ein über die erste Schnittstelle (140) empfangenes RF-Feld übertragen wird.

46. Vorrichtung nach Anspruch 39, **dadurch gekennzeichnet, daß** das Lesegerät (22) Kontaktbalken (210) aufweist und das mindestens eine Adapterelement (102) an einer Seite Kontaktstellen (150) besitzt, die mit den Kontaktbalken (210) des Lesegeräts (22) zusammenwirken können.

47. Vorrichtung nach Anspruch 39, **gekennzeichnet durch** einen Behälter (500), der eingerichtet ist, mehrere Adapterelemente (102) so aufzunehmen, daß sie als ein Stapel dem Lesegerät (22) zuführbar sind.

48. Vorrichtung nach Anspruch 31, **dadurch gekennzeichnet, daß** das Lesegerät (20; 21; 22) eine Einrichtung zum Übertragen der Daten zur Initialisierung in Form von Datenblöcken umfaßt.

49. Vorrichtung nach Anspruch 31, **dadurch gekennzeichnet, daß** das Lesegerät (20; 21; 22) eingerichtet ist, die Datenblöcke in beliebiger Reihenfolge zu übertragen.

50. Vorrichtung nach Anspruch 31, **dadurch gekennzeichnet, daß** das Lesegerät (20; 21; 22) eine Verschlüsselungseinrichtung zum Verschlüsseln von zu übertragenden Daten zur Initialisierung umfaßt.

## Claims

1. A method for the parallel personalization of a plurality of portable data carriers (2, 50), each having an integrated circuit (6) for storing and/or processing information as well as a nonvolatile memory, wherein respectively one personalization signal with personalization data is transmitted to the portable data carriers (2), and the transmitted personalization data are stored in the nonvolatile memory of the integrated circuit (6), wherein the respective personalization signal is transmitted simultaneously or at least in a temporally overlapping fashion by a reading device (3, 4; 20, 21, 22) to several portable data carriers (2), **characterized in that** the same personalization signal is transmitted within the framework of a unidirectional signal transmission in which no communication is provided from the data carriers (2) to the reading device (3, 4; 20, 21, 22).

2. The method according to claim 1, **characterized in that** the personalization signal is transmitted by the reading device (20; 21) in contactless fashion.

3. The method according to claim 2, **characterized in that** the data are received by the portable data carrier (2) in contactless fashion.

4. The method according to claim 2, **characterized in that** several portable data carriers (2) are arranged within an alternating magnetic field generated by the personalization device (1).

5. The method according to claim 2, **characterized in that** the personalization signal is received in contactless fashion by one or several adapter elements (100; 101), wherein the one or the several adapter elements (100; 101) accommodate one data carrier (50) each, and is transmitted to the accommodated data carrier (2) by the adapter element or the adapter elements (100; 101) via contacts on the data carrier (2) intended for connecting a contactless interface.

6. The method according to claim 2, **characterized in that** the plurality of the data carriers (2) is guided through a coil tunnel (200) of the reading device (20) for transmitting the personalization data from the reading device (20) to the data carriers (50).

7. The method according to claim 2, **characterized in that** the plurality of the data carriers (2) is inserted in a Helmholtz coil (201) of the reading device (21) for transmitting the personalization data from the reading device (21) to the data carriers (2).

8. The method according to any of the preceding claims, **characterized in that** the portable data carriers (2) are arranged in the form of a stack.

9. The method according to claim 1, **characterized in that** the data for personalization are transmitted by the reading device (22) in a contact-type fashion.

10. The method according to claim 9, **characterized in that** the data are received by the portable data carrier (50) in a contact-type fashion.

11. The method according to claim 9, **characterized in that** for transmitting the personalization signal electroconductive connections are formed between the reading device (3; 22) and the portable data carriers (2).

12. The method according to claim 9, **characterized in that** respectively at least one portable data carrier (2) is transported by means of a transport device (600), which electrically contacts at least temporarily the contact area (9) of the portable data carrier (2) by means of a contacting unit (604), to a processing station (608) adapted to transmit personalization data to the portable data carrier (2).

13. The method according to claim 12, **characterized in that** the personalization of the portable data carrier (2) is carried out within the period of time in which the transport device (600) electrically contacts the contact area (9).

14. The method according to claim 12, **characterized in that** the transport device (600) is temporarily electrically contacted by one of the processing stations (608), thereby forming an electroconductive connection between this personalization station (12) and at least one contacting unit (8) of the transport device (600).

15. The method according to claim 12, **characterized in that** for a part of the time interval in which the transport device (2) accommodates the portable data carrier (2) the contacting unit (604) of the transport device (600) is moved to an inactive position, in which the contacting unit (604) does not contact the contact area (9) of the portable data carrier (2).

16. The method according to claim 11, **characterized in that** the contacting unit (604) of the transport device (600) is disposed in the inactive position at least temporarily during the transport.

17. The method according to claim 12, **characterized in that** the portable data carrier (2) is inserted in a slot (603) of the transport device (600).

18. The method according to claim 9, **characterized in that** the personalization signal is received in a contact-type fashion by a plurality of adapter elements (102) each accommodating one data carrier (2), and is transmitted in a contact-type fashion by the adapter element (102) to the respective, accommodated data carrier (50).

19. The method according to claim 1, **characterized in that** after the transmission of the personalization signal a presettable period of time is waited for and then a further personalization signal is transmitted.

20. The method according to claim 19, **characterized in that** the period of time is chosen to be at least as long as a processing time expected for the processing of the personalization signal by the portable data carriers (2).

21. The method according to any of the preceding claims, **characterized in that** the data for initialization are transmitted in the form of data blocks.

22. The method according to claim 21, **characterized in that** the data blocks to be transmitted are transmitted in any desired order.

23. The method according to claim 1, **characterized in that** the personalization data are transmitted in an encrypted state and are decrypted on the data carrier (2).

24. The method according to claim 1, **characterized in that** the personalization data determined on the basis of the transmitted personalization signal and/or a memory content generated in the integrated circuit (6) within the framework of the personalization are checked by the portable data carriers (2).

25. The method according to claim 24, **characterized in that** the check takes place by means of checksums.

26. The method according to claim 24, **characterized in that** the portable data carriers (2) are subjected to an unmodulated field for checking the memory content generated in the integrated circuit (6) within the framework of the personalization.

27. The method according to claim 24, **characterized in that** the result of the check is stored respectively in the portable data carriers (2) and/or output by the portable data carriers (2).

28. The method according to claim 24, **characterized in that** the further processing of the portable data carriers (2) is made dependent respectively on the result of the check.

29. The method according to claim 24, **characterized in that** the result of the check is output to a test device (12) which evaluates the result of the check in particular by a comparison with a reference value.

30. The method according to claim 1, **characterized in that** the personalization signal is amplified during the transmission from the reading device (3) to the portable data carriers (2).

31. An apparatus for the parallel personalization of a plurality of portable data carriers (2), respectively having at least one integrated circuit (6) for storing and/or processing information as well as a nonvolatile memory, with a reading device (3, 4; 20, 21, 22) for generating a personalization signal and for transmitting the personalization signal, wherein the reading device (3, 4; 20, 21, 22) is adapted to transmit the personalization signal to a plurality of data carriers (2) simultaneously or at least in a temporally overlapping fashion, **characterized in that** the reading device (20; 21; 22) is adapted to carry out the personalization by means of a one-way protocol, in which no communication is provided from the data carriers (50) to the reading device (20; 21; 22), and is further adapted to transmit the same personalization signal to the plurality of data carriers (2).

32. The apparatus according to claim 31, **characterized in that** the reading device (3; 20, 21, 22) comprises a contactless interface (200; 201) for transmitting a personalization signal in contactless fashion.

33. The apparatus according to claim 32, **characterized in that** the contactless interface is an antenna device (4).

34. The apparatus according to claim 33, **characterized in that** within the transmission range of the antenna device (4) an accommodation area (5) for accommodating several portable data carriers (2) is formed.

35. An apparatus for personalizing portable data carriers (2), respectively having at least one integrated circuit (6) for storing and/or processing information, with a signal source (3) for generating a personalization signal, according to claim 30, **characterized in that** the reading device (22) comprises contact connectors (210) for the contact-type transmission of data for initialization.

36. The apparatus according to claim 35, **characterized in that** to the reading device (3; 22) several contacting devices (10) are connected for electrically contacting respectively at least one portable data carrier (2).

37. The apparatus according to claim 35, **characterized in that** the contacting devices (10) are connected to the reading device (3) respectively via an intermediate amplifier (11).

38. The apparatus according to claim 35 **characterized in that** to the contacting devices (10) respectively one testing device (12) is connected, which evaluates a value output by the contacted portable data carrier (2).

39. The apparatus according to claim 35, **characterized by** at least one adapter element (100; 101; 102) adapted to accommodate at least one data carrier (2), and having a first interface (140; 150) for communicating with the reading device, and having a second interface (120) for communicating with the at least one data carrier (50) to be accommodated.

40. The apparatus according to claim 35, **characterized in that** the adapter element (100; 101) comprises a contactless interface (140) for contactless communication with the reading device (20; 21).

41. The apparatus according to claim 35, **characterized in that** the adapter element (101) comprises an antenna in one half (101b), and an accommodation device for accommodating at least one data carrier (2) in another half (101a).

42. The apparatus according to claim 39, **characterized in that** the first interface (140, 150) comprises one or several contact connectors.

43. The apparatus according to claim 39, **characterized in that** the second interface (120) comprises a contactless interface.

44. The apparatus according to claim 39, **characterized in that** the second interface (120) comprises one or several contact connectors.

45. The apparatus according to claim 39, **characterized in that** via the second interface (120) an RF field received via the first interface (140) is transmitted in the form of current and voltage.

46. The apparatus according to claim 39, **characterized in that** the reading device (22) has contact bars (210) and the at least one adapter element (102) has contact fields (150) on one side, which can interact with the contact bars (210) of the reading device (22).

47. The apparatus according to claim 39, **characterized by** a container (500) adapted to so accommodate several adapter elements (102) that they can be fed to the reading device (22) in the form of a stack.

48. The apparatus according to claim 31, **characterized in that** the reading device (20; 21; 22) comprises a device for transmitting the data for initialization in the form of data blocks.

49. The apparatus according to claim 31, **characterized in that** the reading device (20; 21; 22) is adapted to transmit the data blocks in any desired order.

50. The apparatus according to claim 31, **characterized in that** the reading device (20; 21; 22) comprises an encryption device for encrypting data for initialization to be transmitted.

## Revendications

1. Procédé de personnalisation en parallèle d'une pluralité de supports de données (2, 50) portables qui comportent respectivement un circuit intégré (6) pour la mémorisation et/ou le traitement d'informations ainsi qu'une mémoire non volatile, respectivement un signal de personnalisation comportant des données de personnalisation étant transmis aux supports de données (2), et les données de personnalisation transmises étant enregistrées dans la mémoire non volatile du circuit intégré (6), le signal de personnalisation respectif étant transmis en même temps ou au moins de manière imbriquée dans le temps d'un appareil de lecture (3, 4; 20, 21, 22) à plusieurs supports de données (2) portables, **caractérisé en ce que** le même signal de personnalisation est transmis dans le cadre d'une transmission de signal unidirectionnelle dans lequel aucune communication des supports de données (2) à l'appareil de lecture (3, 4; 20, 21, 22) n'est prévue.

2. Procédé selon la revendication 1, **caractérisé en ce que** le signal de personnalisation est transmis sans contact par l'appareil de lecture (20; 21).

3. Procédé selon la revendication 2, **caractérisé en ce que** les données sont reçues sans contact par le support de données (2) portable.

4. Procédé selon la revendication 2, **caractérisé en ce que** plusieurs supports de données (2) portables sont disposés à l'intérieur d'un champ magnétique alternatif généré par l'équipement de personnalisation (1).

5. Procédé selon la revendication 2, **caractérisé en ce que** le signal de personnalisation est reçu sans contact par un ou plusieurs éléments adaptateurs (100; 101), l'un ou les plusieurs éléments adaptateurs (100; 101) accueillant respectivement un support de données (50), et **en ce que** le signal de personnalisation est, par l'intermédiaire de contacts réalisés sur le support de données (2) et destinés à la connexion d'une interface sans contact, transmis par l'élément adaptateur ou les éléments adaptateurs (100; 101) au support de données (2) accueilli.

6. Procédé selon la revendication 2, **caractérisé en ce que**, pour la transmission des données de personnalisation de l'appareil de lecture (20) aux supports de données (50), la pluralité des supports de données (2) est passée à travers un tunnel de bobine (200) de l'appareil de lecture (20).

7. Procédé selon la revendication 2, **caractérisé en ce que**, pour la transmission des données de personnalisation de l'appareil de lecture (21) aux supports de données (2), la pluralité des supports de données (2) est introduite dans une bobine d'Helmholtz (201) du support de données (21).

8. Procédé selon une des revendications précédentes, **caractérisé en ce que** les supports de données (2) portables sont disposés en pile.

9. Procédé selon la revendication 1, **caractérisé en ce que** les données destinées à la personnalisation sont transmises avec contact par l'appareil de lecture (22).

10. Procédé selon la revendication 9, **caractérisé en ce que** les données sont reçues avec contact par le support de données (50).

11. Procédé selon la revendication 9, **caractérisé en ce que**, pour la transmission du signal de personnalisation, des liaisons électroconductrices sont réalisées entre l'appareil de lecture (3; 22) et les supports de données (2) portables.

12. Procédé selon la revendication 9, **caractérisé en ce que** respectivement au moins un support de données (2) portable est, au moyen d'un dispositif de transport (600) qui entre au moins temporairement électriquement en contact avec la zone de contact (9) du support de données (2) portable au moyen d'une unité de mise en contact (604), transporté à une station de traitement (608) qui est configurée pour la transmission de données de personnalisation au support de données (2) portable.

13. Procédé selon la revendication 12, **caractérisé en ce que** la personnalisation du support de données (2) portable est effectuée à l'intérieur de l'espace de temps durant lequel le dispositif de transport (600) est en contact avec la zone de contact (9).

14. Procédé selon la revendication 12, **caractérisé en ce qu'**une des stations de traitement (608) se met temporairement électriquement en contact avec le dispositif de transport (600) et une liaison électroconductrice est ainsi réalisée entre cette station de personnalisation (12) et au moins une unité de mise en contact (8) du dispositif de transport (600).

15. Procédé selon la revendication 12, **caractérisé en ce que** l'unité de mise en contact (604) du dispositif de transport (600) est, pour une partie de l'intervalle de temps durant lequel le dispositif de transport (2) accueille le support de données (2) portable, portée à une position de repos dans laquelle l'unité de mise en contact (604) ne se met pas en contact avec la zone de contact (9) du support de données (2) portable.

16. Procédé selon la revendication 11, **caractérisé en ce que** l'unité de mise en contact (604) du dispositif de transport (600) se trouve au moins temporairement dans la position de repos pendant le transport.

17. Procédé selon la revendication 12, **caractérisé en ce que** le support de données (2) portable est introduit dans un canal (603) du dispositif de transport (600).

18. Procédé selon la revendication 9, **caractérisé en ce que** le signal de personnalisation est reçu avec contact par une pluralité d'éléments adaptateurs (102) qui accueillent respectivement un support de données (2), et est transmis avec contact par l'élément adaptateur (102) au support de données (50) respectivement accueilli.

19. Procédé selon la revendication 1, **caractérisé en ce que**, après la transmission du signal de personnalisation, il est fait en sorte qu'un laps de temps prédéterminable s'écoule, après quoi un autre signal de personnalisation est à son tour transmis.

20. Procédé selon la revendication 19, **caractérisé en ce que** le laps de temps sélectionné est au moins aussi grand qu'un temps de traitement à prévoir pour le traitement du signal de personnalisation par les supports de données (2) portables.

21. Procédé selon une des revendications précédentes, **caractérisé en ce que** des données destinées à l'initialisation sont transmises sous forme de blocs de données.

22. Procédé selon la revendication 21, **caractérisé en ce que** les blocs de données à transmettre sont transmis dans un ordre quelconque.

23. Procédé selon la revendication 1, **caractérisé en ce que** les données de personnalisation sont transmises sous forme cryptée et sont décryptées sur le support de données (2).

24. Procédé selon la revendication 1, **caractérisé en ce que** les données de personnalisation calculées à partir du signal de personnalisation transmis et/ou un contenu de mémoire généré dans le circuit intégré (6) dans le cadre de la personnalisation sont vérifiés par les supports de données (2) portables.

25. Procédé selon la revendication 24, **caractérisé en ce que** la vérification a lieu au moyen de sommes de contrôle.

26. Procédé selon la revendication 24, **caractérisé en ce que**, pour la vérification du contenu de mémoire généré dans le circuit intégré (6) dans le cadre de la personnalisation, les supports de données (2) portables sont exposés à un champ non modulé.

27. Procédé selon la revendication 24, **caractérisé en ce que** le résultat de la vérification est respectivement mémorisé dans les supports de données (2) portables et/ou est émis par les supports de données (2) portables.

28. Procédé selon la revendication 24, **caractérisé en ce que** le traitement subséquent des supports de données (2) portables est rendu respectivement dépendant du résultat de la vérification.

29. Procédé selon la revendication 24, **caractérisé en ce que** le résultat de la vérification est émis à un équipement d'essai (12) qui évalue le résultat de la vérification notamment par une comparaison avec une valeur de référence.

30. Procédé selon la revendication 1, **caractérisé en ce que** le signal de personnalisation est amplifié durant la transmission de l'appareil de lecture (3) aux supports de données (2) portables.

31. Dispositif de personnalisation en parallèle d'une pluralité de supports de données (2) portables qui comportent respectivement au moins un circuit intégré (6) pour la mémorisation et/ou le traitement d'informations ainsi qu'une mémoire non volatile, comprenant un appareil de lecture (3, 4; 20, 21, 22) destiné à la génération d'un signal de personnalisation et à la transmission du signal de personnalisation, l'appareil de lecture (3, 4; 20, 21, 22) étant configuré pour transmettre en même temps ou au moins de manière imbriquée dans le temps le signal de personnalisation à une pluralité de supports de données (2), **caractérisé en ce que** l'appareil de lecture (20; 21; 22) est configuré pour effectuer la personnalisation au moyen d'un protocole unidirectionnel, dans lequel aucune communication des supports de données (50) à l'appareil de lecture (20; 21; 22) n'est prévue, et est en outre configuré pour transmettre le même signal de personnalisation à la pluralité de supports de données (2).

32. Dispositif selon la revendication 31, **caractérisé en ce que** l'appareil de lecture (3; 20, 21, 22) comprend une interface sans contact (200; 201) pour la transmission sans contact d'un signal de personnalisation.

33. Dispositif selon la revendication 32, **caractérisé en ce que** l'interface sans contact est un équipement d'antenne (4).

34. Dispositif selon la revendication 33, **caractérisé en ce que**, dans les limites de la portée de transmission de l'équipement d'antenne (4), une zone d'accueil (5) pour l'accueil de plusieurs supports de données (2) portables est réalisée.

35. Dispositif de personnalisation de supports de données (2) portables qui comportent respectivement au moins un circuit intégré (6) pour la mémorisation et/ou le traitement d'informations, comprenant une source de signaux (3) destinée à la génération d'un signal de personnalisation, selon la revendication 30, **caractérisé en ce que** l'appareil de lecture (22) comprend des bornes de contact (210) pour la transmission avec contact de données aux fins de l'initialisation.

36. Dispositif selon la revendication 35, **caractérisé en ce que** plusieurs équipements de mise en contact (10) sont connectés sur l'appareil de lecture (3; 22) pour la mise en contact électrique avec respectivement au moins un support de données (2) portable.

37. Dispositif selon la revendication 35, **caractérisé en ce que** les équipements de mise en contact (10) sont respectivement connectés sur l'appareil de lecture (3) par l'intermédiaire d'un amplificateur intermédiaire (11).

38. Dispositif selon la revendication 35, **caractérisé en ce que** respectivement un équipement d'essai (12) évaluant une valeur émise par le support de données (2) portable avec lequel un contact a été établi est connecté sur les équipements de mise en contact (10).

39. Dispositif selon la revendication 35, **caractérisé par** au moins un élément adaptateur (100; 101; 102) qui est configuré pour accueillir au moins un support de données (2) et possède une première interface (140; 150) pour communiquer avec l'appareil de lecture, et possède une deuxième interface (120) pour communiquer avec le au moins un support de données (50) à accueillir.

40. Dispositif selon la revendication 35, **caractérisé en ce que** l'élément adaptateur (100; 101) comprend une interface sans contact (140) pour la communication sans contact avec l'appareil de lecture (20; 21).

41. Dispositif selon la revendication 35, **caractérisé en ce que** l'élément adaptateur (101) comprend dans une moitié (101b) une antenne et dans une autre moitié (101 a) un équipement d'accueil pour l'accueil d'au moins un support de données (2).

42. Dispositif selon la revendication 39, **caractérisé en ce que** la première interface (140, 150) comprend une ou plusieurs bornes de contact.

43. Dispositif selon la revendication 39, **caractérisé en ce que** la deuxième interface (120) comprend une interface sans contact.

44. Dispositif selon la revendication 39, **caractérisé en ce que** la deuxième interface (120) comprend une ou plusieurs bornes de contact.

45. Dispositif selon la revendication 39, **caractérisé en ce que**, par l'intermédiaire de la deuxième interface (120), un champ RF reçu par l'intermédiaire de la première interface (140) est transmis sous forme de courant et tension.

46. Dispositif selon la revendication 39, **caractérisé en ce que** l'appareil de lecture (22) comporte des barres de contact (210) et **en ce que** le au moins un élément adaptateur (102) possède d'un côté des points de contact (150) qui peuvent agir en concomitance avec les barres de contact (210) de l'appareil de lecture (22).

47. Dispositif selon la revendication 39, **caractérisé par** un contenant (500) qui est configuré pour accueillir de telle façon plusieurs éléments adaptateurs (102) qu'il sont acheminables à l'appareil de lecture (22) sous forme d'une pile.

48. Dispositif selon la revendication 31, **caractérisé en ce que** l'appareil de lecture (20; 21; 22) comprend un équipement pour la transmission des données aux fins de l'initialisation sous forme de blocs de données.

49. Dispositif selon la revendication 31, **caractérisé en ce que** l'appareil de lecture (20; 21; 22) est configuré pour transmettre les blocs de données dans un ordre quelconque.

50. Dispositif selon la revendication 31, **caractérisé en ce que** l'appareil de lecture (20; 21; 22) comprend un équipement de cryptage pour le cryptage de données à transmettre aux fins de l'initialisation.
